(19) Europäisches Patentamt / European Patent Office / Office européen des brevets

(11) **EP 3 345 716 B1**

(12) **EUROPEAN PATENT SPECIFICATION**

(45) Date of publication and mention
of the grant of the patent:
**21.10.2020 Bulletin 2020/43**

(21) Application number: **16842004.0**

(22) Date of filing: **02.09.2016**

(51) Int Cl.:
*B23K 35/30* (2006.01)    *B23K 35/362* (2006.01)
*B23K 35/36* (2006.01)    *C22C 38/02* (2006.01)
*C22C 38/04* (2006.01)    *C22C 38/44* (2006.01)
*C22C 38/46* (2006.01)    *C22C 38/48* (2006.01)
*C22C 38/52* (2006.01)    *C22C 38/54* (2006.01)
*B23K 103/04* (2006.01)   *B23K 9/18* (2006.01)
*B23K 35/02* (2006.01)    *B23K 35/40* (2006.01)

(86) International application number:
**PCT/JP2016/075800**

(87) International publication number:
**WO 2017/038975 (09.03.2017 Gazette 2017/10)**

(54) **WIRE FOR SUBMERGED ARC WELDING**

DRAHT FÜR UNTERPULVERLICHTBOGENSCHWEISSEN

FIL POUR SOUDAGE À L'ARC SUBMERGÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2015 JP 2015175218**
**28.04.2016 JP 2016091902**

(43) Date of publication of application:
**11.07.2018 Bulletin 2018/28**

(73) Proprietor: **Kabushiki Kaisha Kobe Seiko Sho (Kobe Steel, Ltd.)**
**Kobe-shi, Hyogo 651-8585 (JP)**

(72) Inventors:
• **IKAI Kazuya**
**Kanagawa 251-8551 (JP)**
• **YAMASHITA Ken**
**Kanagawa 251-8551 (JP)**

(74) Representative: **Müller-Boré & Partner**
**Patentanwälte PartG mbB**
**Friedenheimer Brücke 21**
**80639 München (DE)**

(56) References cited:
**WO-A1-2014/119197    JP-A- H02 280 993**
**JP-A- H04 253 595    JP-A- H11 291 086**
**JP-A- S60 174 295    JP-A- S60 174 295**
**JP-A- 2005 329 415    US-A1- 2005 257 853**

## Description

Technical Field

The present invention relates to a wire for submerged arc welding.

Background Art

Thermal power boilers and turbines, and chemical reactors for desulfurization or reforming (oil refining) are driven at high temperature under high pressure, and therefore depending on operating environments, ferritic heat-resistant steels such as 1.25 Cr-0.5 Mo steel, 2.25 Cr-1.0 Mo steel, 2.25 Cr-1.0 Mo-V steel, high-Cr CSEF steel (creep strength enhanced ferritic steel) containing Cr in an amount of 8 mass% or more and the like are applied thereto. The high-Cr CSEF steel is a ferritic heat-resistant steel in which fine carbides have been deposited through predetermined heat treatment to enhance the creep strength thereof. Examples of the high-Cr CSEF steel include SA387Gr.91, SA213Gr.T91 and others stipulated in ASTM (American Society for Testing and Materials) Standards or ASME (American Society of Mechanical Engineers) Standards.

For example, Mod.9Cr-1Mo steel, one of high-Cr CSEF steels, is excellent in high-temperature strength and corrosion resistance and is applied to piping in thermal power boilers. Recently, in effective utilization of heavy oil and petroleum refining, further enhanced high-efficiency production has become desired, and application of high-Cr CSEF steels thereto is now under investigation. However, in submerged arc welding with high-Cr CSEF steel, in general, the welding heat input is high to often cause hot cracking (so-called solidification cracking). For preventing hot cracking, reduction in C is generally effective, but has a problem in that reduction in C lowers creep strength. Under the situation, as a method for welding with high-Cr CSEF steel, for example, Patent Documents 1 and 2 have been proposed.

Specifically, Patent Document 1 proposes a submerged arc welding method with a 9Cr-1Mo steel, in which a wire containing C: 0.01 to 0.15% (mass%, the same shall apply hereinunder), Mn: 0.4 to 2.5%, Cr: 8.0 to 11.0%, Mo: 0.5 to 1.2%, Ni; 0.05 to 1.3%, V: 0.03 to 0.30%, Nb: 0.02 to 0.12%, Al: 0.005 to 1.5%, N: 0.004 to 0.100%, with Si: defined to 0.05% or less and O: defined 0.01% or less, is combined with a welding flux containing $CaF_2$: 25 to 70%, one or two of CaO and MgO: 8 to 30%, one or two of $Al_2O_3$ and $ZrO_2$: 2 to 35%, Al: 0.5 to 7%, with $SiO_2$: defined to 5% or less, and not substantially containing Si.

Patent Document 2 proposes a submerged arc welding method with a high-Cr ferritic heat-resistant steel using a wire containing, by weight, C: 0.03 to 0.12%, Si: 0.03% or less, Mn: 0.3 to 1.5%, Cr: 8 to 13%, Nb: 0.01 to 0.15%, V: 0.03 to 0.40%, N: 0.01 to 0.08% with the remainder being Fe and unavoidable impurities, and a flux containing $CaF_2$: 10 to 30%, at least one of CaO and MgO: 10 to 40%, $Al_2O_3$: 10 to 40%, and $SiO_2$: 5 to 25%, in which, in accordance with M = M in the wire + 0.7 × M in the flux where M is the following component element, one or both of the wire and the flux contain Mo: 0.3 to 1.6%, W: 0.5 to 3.5%, Ni: 0.05 to 1.2%, at least one of Cu or Co: 1.0 to 5.0%, and Ta: 0.001 to 0.5%, and the amounts of Mo, W, Ni, Cu and Co satisfy a relation of (Mo+W)/(Ni+Cu+Co)≤1.8. US2005/257853A1 describes a welding wire for modified 9Cr-1Mo steel.

Citation List

Patent Documents

Patent Document 1: JP S63-220993 A
Patent Document 2: JP H09-277084 A

Summary of Invention

Technical Problems

As described above, sub-merged arc welding with a high-Cr CSEF steel is generally problematic in that the welding heat input is high to often cause hot cracking (so-called solidification cracking). For example, in thermal power boilers and turbines, and reactors, pipes, tubes, bent steel plates and forged rings are adequately combined and welded. In particular, in reactors, members having a thickness of 150 to 450 mm and a maximum outer diameter of about 7 m are used and welded. In welding these, efficiency is considered to be important, and in general, a submerged arc welding method is used for narrow-gap welding. Recently, operation under further higher-temperature/higher hydrogen partial pressure has become required, and use of high-Cr CSEF steels is under investigation, but the welded part of a high-Cr CSEF steel has high self-hardenability and is in a situation of readily causing hot cracking.

For this, Patent Document 1 proposes a component system capable of satisfying both solidification cracking resistance and welding workability by reducing Si in wire and flux and by adding Al from flux. However, adding Al from flux results in reduction in the amount of carbonitrides to be formed in the weld metal, therefore causing a possibility of remarkably lowering creep strength. In addition, $SiO_2$ is a component having an influence on the viscous behavior of slag and having an influence on a bead appearance, and $CaF_2$ increases basicity to reduce the amount of O in weld metal thereby improving toughness; however, adding too much of these worsens beads appearance and slag peelability. Consequently, sufficient investigation for welding workability is not made in Patent Document 1.

In the invention proposed in Patent Document 2, the post weld heat treatment (PWHT) temperature is 740°C and is low, and therefore recently has become far from the international situation of PWHT that is taken for a long period of time in production of boilers and reactors. Consequently, it is unclear as to whether or not the invention proposed in Patent Document 2 could be applicable to PWHT to be taken for a long period of time, that is, the creep strength after long-term PWHT in the invention is unclear. In addition, welding workability depends on the interaction between the components of wire and the components of flux, and nothing about it is referred to in the literature. For example, the range of the Cr amount in wire is extremely broad, and it could not be considered that every wire falling within the range could have equivalent workability.

The present invention has been made in consideration of the above-mentioned situation, and an object thereof is to provide a wire for submerged arc welding excellent in creep performance, toughness, cracking resistance and welding workability.

Solution to Problems

The present inventors have made assiduous studies for providing a wire for submerged arc welding excellent in creep performance, toughness, cracking resistance and welding workability, and have solved the problem by the following findings and efforts.

Submerged arc welding with a high-Cr CSEF steel requires a high heat input, therefore often causing hot cracking in the surface and the inside of weld beads. This is because the Cr amount is about 9 mass% and is relatively high, and therefore the solidification finish temperature in welding lowers so that the viscosity of the molten metal becomes high and the weld metal could not spread toward the final solidification part, therefore causing cracking. In addition, concentration of a low-melting-point compound in the final solidification part may increase the sensitivity. Further, the microstructure of the weld metal to be formed by wire for submerged arc welding and flux with a high-Cr CSEF steel is mainly a martensite structure, which has a high hardness just as such after welding and is poorly tough. Accordingly, the structure is recovered by PWHT and additionally carbonitrides are precipitated to improve toughness and creep strength.

Consequently, the present inventors have planned chemical components for a wire for submerged arc welding, intending to obtain a weld metal not causing hot cracking in welding but having excellent toughness and creep strength after PWHT.

For improving hot cracking resistance from the viewpoint of component planning for materials, (1) reduction in an element to form a low-melting-point component in a final solidification part, and (2) reduction in an element to lower a solidification finish temperature are effective.

For realizing the above (1), reducing impurities such as P, S and the like is effective, but industrially, these impurities have already been controlled on a sufficiently low level, and reducing them further more would be difficult from the viewpoint of smelting performance.

For realizing the above (2), reducing the main alloying components such as C, Cr and others is effective. In particular, submerged arc welding for narrow grooves has an extremely high sensitivity for hot cracking, and therefore reducing C is especially effective. However, C and Cr are absolutely imperative for securing creep strength, and therefore could not be reduced with no careful consideration. On the other hand, there still remains room for improvement in the other alloying elements than C and Cr. Accordingly, in the present invention, other alloying elements than C and Cr have been investigated in relation to the above (2).

For improving creep strength, (3) securing the precipitation amount of carbonitrides, and prevention of precipitated carbonitrides from becoming coarse, and (4) reducing a soft δ-ferrite phase are effective.

For realizing the above (3), the size of the precipitate to be formed in long-term PWHT will have to be prevented from becoming large while the C amount reduced for improving hot cracking resistance is compensated and secured by any other element. In addition, increasing the amounts of carbonitride-forming elements such as Cr, Nb, V and the like is effective, but increase in the amounts of carbonitride precipitates worsens toughness. At the same time, increase in the amounts of Cr and Nb acts to increase the binding force between weld beads and slag, therefore worsening welding workability (slag peelability). Consequently, in the present invention, alloying elements capable of improving creep strength have been investigated, not adding too much of carbonitride forming elements such as Cr, Nb, V, etc.

Further, for realizing the above (4), reducing alloying elements such as Si, Cr, Mo and the like capable of stabilizing a ferrite phase, or increasing the amounts of alloying elements such as Mn, Ni, Co and the like that may stabilize an austenite phase and may relatively destabilize a ferrite phase is effective. However, a point will have to be taken into consideration that some of these alloying elements may change the precipitation amounts of carbonitrides and may have some influence on the toughness and the creep performance of weld metal. Carbonitrides as referred to herein are meant to indicate composite compounds of carbides and nitrides with mainly Nb and V. The content of these elements will have to be controlled so as not to detract from the effects of the above (3).

In addition, the components of flux also have some influence on toughness. Consequently, as components of flux for the purpose of securing toughness, predetermined amounts of a metal fluoride and a metal carbonate are added, but increasing too much of the added amounts may worsen slag peelability and welding workability. Accordingly, for securing welding workability, adding suitable amounts of Ca, Si and Al for highly satisfying both toughness and slag peelability is additionally investigated herein.

As a result of assiduous studies, the present inventors have clarified that Ni concentrates in the final solidification part in welding to lower the solidification finish temperature, thereby promoting hot cracking. In addition, the inventors have clarified that Ni has no influence on the precipitation amount of carbonitrides in PWHT but destabilizes carbonitrides to promote so-called Ostwald growth to decrease as much as possible the surface area per unit volume to promote coarsening them, thereby worsening creep strength. Consequently, the inventors have succeeded in planning a low-Ni wire for submerged arc welding to prevent hot cracking and to increase creep strength, by stabilizing carbonitrides not having any influence on the precipitation amount of carbonitrides and not worsening toughness.

The wire for submerged arc welding which solve the above problem(s) by the above-described findings and means is a wire for submerged arc welding for use in combination with a flux as defined in the claims.

Advantageous Effects of Invention

The wire for submerged arc welding of the present invention is excellent in creep performance, toughness, cracking resistance and welding workability.

Brief Description of Drawings

[FIG. 1] This is a schematic diagram illustrating the shape of a groove of a test plate having undergone a welding test.
[FIG. 2] This is a schematic diagram illustrating a welding condition for evaluating hot cracking resistance.
[FIG. 3] This is a schematic diagram illustrating a test piece collecting site for a Charpy impact test piece and a creep test piece.
[FIG. 4A] This is a schematic diagram illustrating the shape of a creep test piece.
[FIG. 4B] This is an enlarged view of the part A in FIG. 4A.

Description of Embodiments

Embodiments of carrying out the wire for submerged arc welding of the present invention (hereinafter may be simply referred to as "wire") are described in detail hereinunder. In the following description, the numerical value range between former and latter values includes the former and latter values, and in the case where the range does not include the values, the values are explicitly expressed with a wording "less than" or "smaller than", or "more than" or "larger than" or the like. The values with "or more", "or less", "$\leq$" or "$\geq$" each include the corresponding value, while the values with "<" or ">" each do not include the corresponding value.

<First Embodiment>

The wire of the first embodiment is used in combination with a flux. Any flux is usable, and preferred examples thereof are described hereinunder.

The wire contains, relative to the total mass of the wire and in mass%, C: 0.03 to 0.13%, Si: 0.05 to 0.50%, Mn: 0.20 to 1.40%, Cr: 8.00 to 10.50%, Mo: 0.85 to 1.20%, V: 0.15 to 0.30%, Nb: 0.02 to 0.09%, N: 0.03 to 0.09%, with Ni: 0.70% or less, P: 0.010% or less, S: 0.010% or less, Cu: 0.30% or less, Al: 0.04% or less, B: 0.0015% or less, O: 0.030% or less, the total amount of the contained Mn amount and the contained Ni amount: 0.50 to 1.75%, the ratio Mn/S of the contained Mn amount to the contained S amount: 87 or more, and the remainder being Fe and unavoidable impurities.

The reasons for defining the chemical components of the wire of the first embodiment are described below.

The wire components of the first embodiment are as follows, relative to the total mass of the wire and in mass%.

(C: 0.03 to 0.13%)

C has a significant influence on the hardenability during quenching and the precipitation amount of carbonitrides in weld metal, and functions as an austenite-stabilizing element to prevent a δ-ferrite phase from remaining in weld metal. When the C amount in weld metal is too small, the precipitation amount of carbides may be insufficient and, in addition, a δ-ferrite phase may remain to fail in obtaining a predetermined creep strength. On the other hand, when the C amount is too much, hot crack susceptibility may increase and, in particular, cracks may often occur in submerged arc welding inside narrow grooves. In addition, when the C amount is too much, the precipitation amount of carbides may increase to extremely enhance the strength of weld metal to worsen the toughness thereof. Accordingly, the C amount is 0.03 to 0.13%. The lower limit of the C amount is preferably 0.04%, more preferably 0.07%, even more preferably 0.08%. The upper limit of the C amount is preferably 0.12%.

(Si: 0.05 to 0.50%)

Si improves the compatibility of weld beads and functions as a deoxidizing agent to improve the strength and the toughness of weld metal. When the Si amount in weld metal is too small, welding workability (for example, compatibility or fusibility of weld beads) may worsen and toughness and creep strength may also worsen. On the other hand, when the Si amount is too much, the strength of weld metal may be thereby extremely increased to worsen toughness. Accordingly, the Si amount is 0.05 to 0.50%. The lower limit of the Si amount is preferably 0.10%. The upper limit of the Si amount is preferably 0.40%, more preferably 0.30%.

(Mn: 0.20 to 1.40%)

Like Si, Mn functions as a deoxidizing agent to improve the toughness of weld metal. Further, Mn functions as an austenite-stabilizing element to prevent a δ-ferrite phase from remaining in weld metal. When the Mn amount in weld metal is too small, a predetermined toughness could not be obtained and, in addition, a soft δ-ferrite phase may remain in weld metal to worsen creep strength. On the other hand, when the Mn amount in weld metal is too much, carbonitrides may be thereby destabilized to worsen creep strength. As described below, Mn is effective for relaxing a negative influence of S on hot cracking. Accordingly, the Mn amount is 0.20 to 1.40%. The lower limit of the Mn amount is preferably 0.55%, more preferably 0.60%. The upper limit of the Mn amount is preferably 1.00%, more preferably 0.80%.

(Cr: 8.00 to 10.50%)

Cr forms carbonitrides during PWHT to thereby enhance the creep strength of weld metal. When the Cr amount is too small, the precipitation amount of carbonitrides may be insufficient to fail in obtaining a predetermined creep strength. On the other hand, when the Cr amount is too much, the solidification finish point may lower to increase hot cracking susceptibility, and a δ-ferrite phase may thereby remain in weld metal to worsen creep strength and toughness. In addition, when the Cr amount is too much, slag peelability greatly worsens. Accordingly, the Cr amount is 8.00 to 10.50%. The lower limit of the Cr amount is preferably 8.40%. The upper limit of the Cr amount is preferably 9.20%.

(Mo: 0.85 to 1.20%)

Mo dissolves in solid in Cr carbides or in the matrix during PWHT to enhance the creep strength of weld metal. When the Mo amount is too small, a predetermined creep strength could not be obtained. On the other hand, when the Mo amount is too much, the dissolved amount in Cr carbides and in the matrix may excessively increase to significantly increase the strength of weld metal thereby worsening the toughness thereof. Accordingly, the Mo amount is 0.85 to 1.20%. The lower limit of the Mo amount is preferably 0.94%. The upper limit of the Mo amount is preferably 1.05%.

(V: 0.15 to 0.30%)

V forms carbonitrides during PWHT to improve the creep strength of weld metal. When the V amount is too small, a predetermined creep strength could not be obtained. On the other hand, when the V amount is too much, the precipitation amount of carbonitrides significantly increases to increase the strength of weld metal, thereby worsening the toughness thereof. Accordingly, the V amount is 0.15 to 0.30%. The lower limit of the V amount is preferably 0.21%. The upper limit of the V amount is preferably 0.27%.

(Nb: 0.02 to 0.09%)

Like V, Nb forms carbonitrides during PWHT to improve the creep strength of weld metal. When the Nb amount is too small, a predetermined creep strength could not be obtained. On the other hand, when the Nb amount is too much, the precipitation amount of carbonitrides significantly increases to increase the strength of weld metal, thereby worsening the toughness thereof. In addition, when the Nb amount is too much, slag peelability may greatly worsen. Accordingly, the Nb amount is 0.02 to 0.09%. The lower limit of the Nb amount is preferably 0.04%. The upper limit of the Nb amount is preferably 0.08%, more preferably 0.07%.

(N: 0.03 to 0.09%)

N binds with V and Nb to form carbonitrides during PWHT, thereby increasing the creep strength of weld metal. When the N amount is too small, a predetermined creep strength could not be obtained. On the other hand, when the N amount is too much, the precipitation amount of carbonitrides greatly increases to increase the strength of weld metal, thereby worsening the toughness thereof. Further, when the N amount is too much, the $N_2$ gas to form during welding may readily remain in a molten metal to form blow holes. Accordingly, the N amount is 0.03 to 0.09%. The lower limit of the N amount is preferably 0.04%. The upper limit of the N amount is preferably 0.07%, more preferably 0.06%.

(Ni: 0.70% or less)

Ni is a most characteristic element in this embodiment of the present invention. Ni concentrates in the final solidification part in welding to depress the solidification finish temperature to thereby enhance hot cracking susceptibility. In addition, Ni enlarges the size of carbonitrides during creep deformation to worsen creep strength. Accordingly, the Ni amount is 0.70% or less. The Ni amount is preferably 0.50% or less, more preferably 0.20% or less.

(P: 0.010% or less)

P forms a low-melting-point compound in the final solidification part during welding to not only enhance hot cracking susceptibility but also embrittle weld metal to worsen the toughness thereof. Accordingly, the P amount is 0.010% or less. The P amount is preferably 0.006% or less.

(S: 0.010% or less)

S binds with Fe in welding to form a low-boiling-point eutectic of Fe-FeS in the final solidification part, thereby not only enhancing hot cracking susceptibility but also embrittling weld metal to worsen the toughness thereof. Accordingly, the S amount is 0.010% or less. The S amount is preferably 0.007% or less. On the other hand, S is effective for improving the compatibility of weld beads and slag peelability, and for securing the effect, the S amount is preferably 0.002% or more, more preferably 0.003% or more.

(Cu: 0.30% or less)

When the Cu amount in the wire increases, the Cu amount in weld metal increases to worsen toughness. Accordingly, the Cu amount is 0.30% or less. The Cu amount is preferably 0.10% or less. Regarding the Cu amount, in the case where the surface of a welding wire is coated with Cu by an electroplating method or the like, the Cu amount is controlled to be 0.30% or less including the coating Cu amount.

(Al: 0.04% or less)

Al binds with N to form AlN thereby reducing the precipitation amount of carbonitrides of Cr, Nb or V indispensable for securing creep strength, and worsening creep strength. When the Al amount increases, beads may scorch to worsen slag peelability. In addition, the elemental yield in weld metal increases to increase strength and, as a result, worsen toughness. Accordingly, the Al amount is 0.04% or less. The Al amount is preferably 0.03% or less.

(B: 0.0015% or less)

B depresses the final solidification temperature during welding to enhance hot cracking susceptibility. Accordingly, the B amount is 0.0015% or less. The B amount is preferably 0.0003% or less.

(O: 0.030% or less)

O binds with Si, Mn, Al or the like during solidification in welding to form oxides to increase the amount of slag. The formed oxides act as a starting point of brittle fracture to thereby worsen the toughness of weld metal. Accordingly, the O amount is 0.030% or less. The O amount is preferably 0.005% or less.

(Total amount of contained Mn amount and contained Ni amount: 0.50 to 1.75%)

From the viewpoint of securing toughness, reducing δ-ferrite phase and securing creep strength, it is effective to control the total amount of the contained Mn amount and the contained Ni amount. Specifically, from the viewpoint of securing toughness, it is necessary to define the lower limit of the total amount of the contained Mn amount and the contained Ni amount, and from the viewpoint of reducing δ-ferrite phase and securing creep strength, it is necessary to define the upper limit of the total amount of the contained Mn amount and the contained Ni amount. Concretely, the total amount of the contained Mn amount and the contained Ni amount is 0.50 to 1.75%. The lower limit of the total amount of the contained Mn amount and the contained Ni amount is preferably 0.70%. The upper limit of the total amount of the contained Mn amount and the contained Ni amount is preferably 1.15%, more preferably 1.00%.

(Ratio Mn/S of contained Mn amount to contained S amount: 87 or more)

In addition, Mn binds with S during welding solidification to form MnS to thereby relax the above-mentioned negative influence to reduce hot cracking. For obtaining such effects, the ratio Mn/S of the contained Mn amount to the contained S amount needs to be 87 or more. The ratio Mn/S of the contained Mn amount to the contained S amount is preferably 100 or more, more preferably 150 or more.

(Remainder)

The remainder is Fe and unavoidable impurities. Examples of the unavoidable impurities include Sn, As, Sb, Pb, Bi, etc. In this embodiment of the present invention, Sn, As and Sb each may be 0.005 mass% or less, and the total thereof may be 0.015 mass% or less. Pb and Bi each may be, for example, 0.001 mass% or less. So far as these requirements are satisfied, such unavoidable impurities and any other element than the elements referred to in this description may be positively contained in the wire (such embodiments are included with the technical scope of the wire of this embodiment of the present invention).

In the wire of the first embodiment described hereinabove, the above-mentioned chemical components, the total amount of the contained Mn amount and the contained Ni amount, and the ratio (Mn/S) of the contained Mn amount to the contained S amount each are controlled to fall within the above-mentioned range. Consequently, the wire, when used in combination with any flux, does not undergo hot cracking in welding and is excellent in creep strength and toughness after PWHT, and also excellent in welding workability.

<Second Embodiment>

The chemical components of the wire of the second embodiment are almost the same as those of the wire of the first embodiment, but the content of C, Mn, Nb, N, Ni and S in the wire of the second embodiment and the total amount of the contained Mn amount and the contained Ni amount differ from those in the wire of the first embodiment. In addition, the wire of the second embodiment further differs from the wire of the first embodiment in that the former contains Co.

Specifically, the wire of the second embodiment contains, relative to the total mass of the wire and in mass%, C: 0.07 to 0.13%, Si: 0.05 to 0.50%, Mn: 0.20 to 1.00%, Cr: 8.00 to 10.50%, Mo: 0.85 to 1.20%, V: 0.15 to 0.30%, Nb: 0.02 to 0.08%, Co: 0.05 to 0.80%, N: 0.03 to 0.07%, with Ni: 0.50% or less, P: 0.010% or less, S: 0.002 to 0.010%, Cu: 0.30% or less, Al: 0.04% or less, B: 0.0015% or less, O: 0.030% or less, the total amount of the contained Mn amount and the contained Ni amount: 0.50 to 1.15%, the ratio Mn/S of the contained Mn amount to the contained S amount: 87 or more, and the remainder being Fe and unavoidable impurities.

Namely, the wire of the second embodiment differs from the wire of the first embodiment in that the former contains C: 0.07 to 0.13%, Mn: 0.20 to 1.00%, Nb: 0.02 to 0.08%, Co: 0.05 to 0.80%, N: 0.03 to 0.07%, with Ni: 0.50% or less, S: 0.002 to 0.010%, and the total amount of the contained Mn amount and the contained Ni amount: 0.50 to 1.15%. In the other points, the wire of the second embodiment is the same as the wire of the first embodiment.

Each content of C, Mn, Nb, N, Ni and S in the wire of the second embodiment and the total amount of the contained Mn amount and the contained Ni amount differ from those of the numerical range in the wire of the first embodiment, but the reasons for the numerical definition are the same as those for the wire of the first embodiment, and accordingly, the description relating to these is omitted herein, and the reason for definition of Co is described below.

(Co: 0.05 to 0.80%)

Co functions as an austenite-stabilizing element. Accordingly, Co prevents a $\delta$-ferrite phase from remaining and improves creep strength. When the amount thereof is too small, Co could not exhibit the effect; but when too much, the strength of weld metal increases to worsen toughness. Consequently, the Co amount is preferably 0.05 to 0.80%. For further satisfying both creep strength and toughness, the Co amount is more preferably 0.10 to 0.75%, even more preferably 0.10 to 0.50%.

(Flux)

Here, the flux preferred for use in the first embodiment and the second embodiment is described.
The wire of the first embodiment and the second embodiment may be used in combination with any flux, but is preferably used in combination with the flux defined below.
Preferably, the flux contains, for example, relative to the total mass of the flux and in mass%, a metal fluoride (in terms of F): 1.5 to 11%, a metal carbonate (in terms of $CO_2$): 3 to 15%, one or two or more of MgO, $Al_2O_3$, $ZrO_2$ and $TiO_2$ in total: 10 to 60%, $SiO_2$: 5 to 20%, Mn: 2.5% or less, Ni: 0.10% or less, S: 0.010% or less, one or two or more of Ca, Si and Al in total: 0.5 to 2.5%.

(Metal Fluoride (in terms of F): 1.5 to 11%)

The metal fluoride has an effect of reducing the diffusive hydrogen amount in weld metal and improving cold cracking resistance, plays a role of controlling the oxygen amount in weld metal, and has an effect of regulating the shape of beads. In the case of the wire of the embodiment of the present invention, where the content of the metal fluoride in terms of F is 1.5% or more, the oxygen amount in weld metal reduces to improve toughness. When the content of the metal fluoride in terms of F is 11% or less, arc can be stabilized to better the shape of beads and slag peelability. Consequently, the content of the metal fluoride in terms of F in the flux is preferably 1.5 to 11%. The lower limit of the metal fluoride is more preferably 4%. The upper limit of the metal fluoride is more preferably 9%. Examples of the metal fluoride include $CaF_2$, $AlF_3$, $BaF_3$, $Na_3AlF_6$, $MgF_2$, NaF, etc., and when the content thereof in terms of F is the same, the metal fluoride exhibits the same effect.

(Metal Carbonate (in terms of $CO_2$): 3 to 15%)

$CO_2$ from the metal carbonate has an effect of reducing the diffusive hydrogen amount in weld metal and improving cold cracking resistance, and plays a role of controlling the oxygen amount in weld metal. In the case of the wire of the embodiment of the present invention, the content of the metal carbonate in terms of $CO_2$ is preferably 3% or more for efficiently attaining the effect. When the content of the metal carbonate in terms of $CO_2$ is 15% or less, the oxygen amount in weld metal reduces to improve toughness and also improve slag peelability. Accordingly, the content of the metal carbonate in terms of $CO_2$ is preferably 3 to 15%. The lower limit of the metal carbonate is more preferably 5%. The upper limit of the metal carbonate is more preferably 10%. Examples of the metal carbonate include $CaCO_3$, $BaCO_3$, $MgCO_3$, etc., and when the content thereof in terms of $CO_2$ is the same, the metal carbonate exhibits the same effect.

(Total of one or two or more of MgO, $Al_2O_3$, $ZrO_2$ and $TiO_2$: 10 to 60%)

MgO, $Al_2O_3$, $ZrO_2$ and $TiO_2$ are slag-making agents. These slag-making agents are effective for improving slag flowability and controlling the shape of beads. In the case of the wire of the embodiment of the present invention, the total of one or two or more of these is preferably 10% or more for efficiently attaining the effect. On the other hand, when the total of one or two or more of these is 60% or less, slag entangling may hardly occur to improve welding workability. Accordingly, the total of one or two or more of MgO, $Al_2O_3$, $ZrO_2$ and $TiO_2$ in the flux is preferably 10 to 60%.
In addition, if desired, $Na_2O$, $K_2O$, $LiO_2$, BaO and the like may be added to the flux. In the case where these are added, the amount thereof is preferably each 10% or less.

($SiO_2$: 5 to 20%)

$SiO_2$ is effective for improving slag flowability and controlling the shape of beads. In the case of the wire of the embodiment of the present invention, the $SiO_2$ amount is preferably 5% or more for effectively attaining the effect. When

the $SiO_2$ amount is 20% or less, slag entangling may hardly occur to improve welding workability. Accordingly, the $SiO_2$ amount in the flux is preferably 5 to 20%. The lower limit of the $SiO_2$ amount is preferably 8%. The upper limit of the $SiO_2$ amount is preferably 15%. Here, this $SiO_2$ encompasses $SiO_2$ derived from water glass used as a binder.

(Mn: 2.5% or less)

Mn in the flux exhibits the same effect as that of Mn in the wire. Namely, Mn in the flux functions as a deoxidizing agent to improve the toughness of weld metal. However, Mn in the flux may readily segregate in weld metal and therefore could not often exhibit a sufficient effect. In addition, much of Mn in the flux forms a slag and therefore could not sufficiently remain in weld metal. Basically, Mn is stabilized more in point of the performance thereof when added from the wire. Accordingly, the Mn amount in the flux is preferably 2.5% or less. The Mn amount in the flux is more preferably 2.0% or less.

(Ni: 0.10% or less)

Ni in the flux exhibits the same effect as that of Ni in the wire, providing a probability of lowering the solidification finish temperature to enhance hot cracking susceptibility. In addition, Ni in the flux readily segregates in weld metal, therefore providing a possibility of locally increasing hot cracking susceptibility. Accordingly, the Ni amount in the flux is preferably 0.10% or less. More preferably, the Ni amount in the flux is 0.05% or less.

(S: 0.010% or less)

S in the flux exhibits the same effect as that of S in the wire, and increases hot cracking susceptibility. In addition, S in the flux readily segregates in weld metal, therefore providing a possibility of locally increasing hot cracking susceptibility. Accordingly, the S amount in the flux is preferably 0.010% or less.

(Total of one or two or more of Ca, Si and Al: 0.5 to 2.5%)

Ca, Si and Al in the flux act as a deoxidizing agent to reduce O in weld metal. In the case of the wire of the embodiment, when the total of one or two or more of Ca, Si and Al in the flux is 0.5% or more, a sufficient deoxidizing effect can be attained to better the appearance of beads. In addition, when the total of one or two or more of Ca, Si and Al in the flux is 2.5% or less, the slag peelability improves. Accordingly, the total of one or two or more of Ca, Si and Al in the flux is preferably 0.5 to 2.5%.

(Relation of chemical components between wire and flux)

Regarding the wire of the second embodiment, preferably, the relation of the chemical components between the wire and the flux satisfies the following relational formula.

(Regarding Mn and Ni)

The wire of the second embodiment preferably satisfies the following relational formulae (1) to (3) where $[Mn]_W$ is the Mn amount (%) of the wire components and is $[Ni]_W$ the Ni amount (%) of the wire components, and $[Mn]_F$ is the Mn amount (%) of the flux components and $[Ni]_F$ is the Ni amount (%) of the flux components

$$0.55\% \leq [Mn]_W + 0.1 \times [Mn]_F \leq 1.00\% \qquad (1)$$

$$[Ni]_W + [Ni]_F \leq 0.50\% \qquad (2)$$

$$0.60\% \leq [Mn]_W + 0.1 \times [Mn]_F + [Ni]_W + [Ni]_F \leq 1.15\% \qquad (3)$$

The relational formula (1) is to consider the Mn yield in the wire and the flux in the wire of the embodiment of the present invention. Mn functions as an austenite-stabilizing element and prevents a $\delta$-ferrite phase from remaining in weld metal. When the Mn amount in weld metal is too small, predetermined toughness could not be obtained. In addition, when the Mn amount in weld metal is too small, a soft $\delta$-ferrite phase may remain in weld metal to often worsen creep strength. On the other hand, too much Mn in weld metal may destabilize carbonitride and may worsen creep strength. Accordingly, as shown by the relational formula (1), the range of the calculated value is preferably 0.55 to 1.00%. The lower limit of the value to be calculated by the relational formula (1) is more preferably 0.60%. The upper limit of the value to be calculated by the relational formula (1) is more preferably 0.80%.

The relational formula (2) is to consider the Ni yield in the wire and the flux in the wire of the embodiment of the present invention. Ni may lower the solidification finish temperature to increase hot cracking susceptibility. Accordingly, as shown by the relational formula (2), the calculated value is preferably 0.50% or less. The calculated value in the relational formula (2) is more preferably 0.20% or less.

The relational formula (3) is to consider the Mn and Ni yield in the wire and the flux in the wire of the embodiment of the present invention. From the viewpoint of securing toughness, preferably, the lower limit of the total amount of the Mn amount and the Ni amount is defined, but from the viewpoint of reducing $\delta$-ferrite phase and securing creep strength, preferably, the upper limit of the total amount of the Mn amount and the Ni amount is defined. Accordingly, as shown by the relational formula (3), the range of the calculated value is preferably 0.60 to 1.15%. The lower limit of the value calculated by the relational formula (3) in the second embodiment is more preferably 0.70%. The upper limit of the value calculated by the relational formula (3) is more preferably 1.00%.

(Regarding Pb and Bi)

The wire and the flux may contain at least one of Pb and Bi as impurities.

In this case, the wire of the embodiment of the present invention preferably satisfies the following relational formula (4) where $[Pb]_W$ is the Pb amount (ppm (which means ppm by mass, and the same shall apply hereinunder)) of the wire components and $[Bi]_W$ is the Bi amount (ppm) of the wire components, and $[Pb]_F$ is the Pb amount (ppm) of the flux components and $[Bi]_F$ is the Bi amount (ppm) of the flux components.

$$[Pb]_W + [Bi]_W + 0.2 \times [Pb]_F + 0.2 \times [Bi]_F \leq 2.0 \text{ ppm} \quad (4)$$

The relational formula (4) is to consider the Pb and Bi yield in the wire and the flux in the wire of the embodiment of the present invention. Pb and Bi are elements to segregate in the crystal grain boundary through tempering to cause embrittlement, and may often significantly worsen toughness. Accordingly, as shown by the relational formula (4), the calculated value is preferably 2.0 ppm or less. The calculated value in the relational formula (4) is more preferably 1.5 ppm or less.

(Regarding P, Sn, As and Sb)

The wire and the flux may contain at least one of P, Sn, As and Sb as impurities component.

In this case, the wire of the embodiment of the present invention preferably satisfies the following relational formulae (5) to (7) where $[P]_W$ is the P amount (ppm) of the wire components, $[Sn]_W$ is the Sn amount (ppm) of the wire components, $[As]_W$ is the As amount (ppm) of the wire components and $[Sb]_W$ is the Sb amount (ppm) of the wire components , and $[P]_F$ is the P amount (ppm) of the flux components, $[Sn]_F$ is the Sn amount (ppm) of the flux components, $[As]_F$ is the As amount (ppm) of the flux components and $[Sb]_F$ is the Sb amount (ppm) of the flux components. In the previous description, P is defined by "%". Accordingly, in calculating the following relational formulae (5) to (7) for P, the unit is in terms of "ppm". 1% = 10000 ppm.

$$X = 10 \times [P]_W + 4 \times [Sn]_W + [As]_W + 5 \times [Sb]_W \quad (5)$$

$$Y = 10 \times [P]_F + 4 \times [Sn]_F + [As]_F + 5 \times [Sb]_F \quad (6)$$

$$X + 0.2 \times Y \leq 1500 \text{ ppm} \quad (7)$$

The relational formula (7) to be calculated by substituting the relational formulae (5) and (6) thereinto is to consider the P, Sn, As and Sb yield in the wire and the flux in the wire of the embodiment. P, Sn, As and Sb are elements to segregate in the crystal grain boundary through tempering to cause embrittlement, and may often significantly worsen toughness. Accordingly, the value to be calculated by the relational formula (7) by substituting the relational formulae (5) and (6) thereinto is preferably 1500 ppm or less. The value to be calculated by the relational formula (7) is more preferably 1200 ppm or less.

(Remainder)

The other remainder in the componential composition of the flux for use in the present invention may contain, as other metals, for example, a metal Fe, a metal Mo, a metal W, a metal Cu and the like within a range not detracting from the advantageous effects of the present invention. These components may be in the form of a single phase, but may also be in the form of an alloy.

The other remainder is unavoidable impurities. As the unavoidable impurities, for example, Ta, B and the like may be contained within a range not detracting from the advantageous effects of the present invention. These unavoidable impurities are contained since natural minerals are used as raw materials. So far as the content thereof does not overstep the above-mentioned predetermined range, the unavoidable impurities may be contained as they are unavoidable impurities or may be positively added not detracting from the advantageous effects of the present invention.

A metal Fe, a metal Mo, a metal W, a metal Cu and the like that are not indispensable elements may be positively added, or may be contained as unavoidable impurities.

(Submerged arc welding method for second embodiment)

The submerged arc welding method for the second embodiment may be carried out by combining the wire and the flux described in the second embodiment, and may be carried out as follows not limited to any specific condition.

For example, the method may be a multi-electrode method using 2 to 4 electrodes (wires), or may be a single electrode method using one electrode. The wire diameter may be 2.4 to 4.8 mmϕ. The power polarity may be any of DCEP (direct current electrode positive) or AC (alternating current). The wire supply speed may be 100 to 170 g/min. The weld speed may be 20 to 60 cm/min. The weld current may be 350 to 500 A. The arc voltage may be 29 to 33 V. The welding heat input may be 15 to 25 kJ/cm. The flux spray height may be 25 to 35 mm. The chip/matrix distance may be 25 to 35 mm.

The submerged arc welding method for the second embodiment uses the wire and the flux of the second embodiment as combined, and can therefore provide excellent creep performance, toughness, cracking resistance and welding workability.

<Third Embodiment>

The chemical components of the wire of the third embodiment are almost the same as those of the wire of the first embodiment, but the wire of the third embodiment differs from that of the first embodiment in that the C amount, the total amount of the Mn amount and the Ni amount, and the total amount of the C amount and the N amount in the former each are defined to fall within a predetermined range. In addition, the two differ from each other in that, in the wire of the third embodiment, the values to be calculated from the V amount, the Nb amount, the C amount, the N amount, the Ni amount, the Mn amount, the Al amount satisfy the relational formula (8).

Specifically, the wire of the third embodiment contains, relative to the total mass of the wire and in mass%, C: 0.03 to 0.08%, Si: 0.05 to 0.50%, Mn: 0.20 to 1.40%, Cr: 8.00 to 10.50%, Mo: 0.85 to 1.20%, V: 0.15 to 0.30%, Nb: 0.02 to 0.09%, N: 0.03 to 0.09%, with Ni: 0.70% or less, P: 0.010% or less, S: 0.010% or less, Cu: 0.30% or less, Al: 0.04% or less, B: 0.0015% or less, O: 0.030% or less, the total amount of the contained Mn amount and the contained Ni amount: 0.60 to 1.75%, the ratio Mn/S of the contained Mn amount to the contained S amount: 87 or more, the total amount of the contained C amount and the contained N amount: 0.09 to 0.15%, and the remainder being Fe and unavoidable impurities.

Namely, the wire of the third embodiment differs from the wire of the first embodiment in that the former contains C: 0.03 to 0.08%, the total amount of the contained Mn amount and the contained Ni amount is 0.60 to 1.75%, and the total amount of the contained C amount and the contained N amount is 0.09 to 0.15%. In the wire of the third embodiment, the numerical range of the C amount, and that of the total amount of the contained Mn amount and the contained Ni amount are narrower than those in the first embodiment, but the reasons for the numerical limitation are the same as those for the wire of the first embodiment, and accordingly, the description relating to these is omitted herein, and the total amount of the C amount and the N amount is described below.

(Total amount of contained C amount and contained N amount: 0.09 to 0.15%)

From the viewpoint of securing toughness and securing creep strength, it is effective to control the total amount of the contained C amount and the contained N amount. In the case of the wire of this embodiment, when the total amount of the C amount and the N amount is 0.09% or more, creep strength improves. When the total amount of the C amount and the N amount is 0.15% or less, toughness improves. Accordingly, the total amount of the contained C amount and the contained N amount is preferably 0.09 to 0.15%. The lower limit of the total amount of the C amount and the N amount is more preferably 0.10%. The upper limit of the total amount of the contained C amount and the contained N amount is more preferably 0.14%.

(Regarding V, Nb, C, N, Ni, Mn and Al)

The wire of the third embodiment preferably satisfies the following relational formula (8) where $[V]_w$ is the V amount (%) of the wire components, $[Nb]_w$ is the Nb amount (%) of the wire components, $[C]_w$ is the C amount (%) of the wire components, $[N]_w$ is the N amount (%) of the wire components, $[Ni]_w$ is the Ni amount (%) of the wire components, $[Mn]_w$ is the Mn amount (%) of the wire components, and $[Al]_w$ is the Al amount (%) of the wire components.

$$([C]_w + 1.5 \times [N]_w) \times ([V]_w + 10 \times [Nb]_w - [Al]_w)/([Mn]_w + [Ni]_w) \times 100 \geq 5\%$$

$$(8)$$

The relational formula (8) is to consider the ability to secure creep performance after long-term PWHT. The wire of this embodiment is so planned that carbonitrides of mainly Nb and V are positively precipitated. These carbonitrides are kept fine after long-term PWHT and are effective for securing creep performance. The numerator in this formula is a term to indicate an effective amount of precipitates, and the dominator is a term to have an influence on coarsening precipitates. Namely, when the value calculated by the relational formula (8) is larger, the amount and the size of precipitates effective for creep performance can be secured. The value to be calculated by the relational formula (8) is preferably 7% or more, more preferably 10% or more.

(Flux)

Also in the third embodiment, the above-mentioned flux can be favorably used.

In the case where the flux is used along with the wire of the third embodiment, the relationship of the chemical components between the wire and the flux preferably satisfies the following relational formulae.

The wire of the third embodiment preferably satisfies the following relational formulae (9) to (12) where $[Mn]_F$ is the Mn amount (%) of the flux components and $[Ni]_F$ is the Ni amount (%) of the flux components. $[V]_w$, $[Nb]_w$, $[C]_w$, $[N]_w$, $[Ni]_w$, $[Mn]_w$ and $[Al]_w$ have the same meanings as in the above-mentioned relational formula (8).

$$0.55\% \leq [Mn]_w + 0.1 \times [Mn]_F \leq 1.00\% \qquad (9)$$

$$[Ni]_w + [Ni]_F \leq 0.70\% \qquad (10)$$

$$0.60\% \leq [Mn]_w + 0.1 \times [Mn]_F + [Ni]_w + [Ni]_F \leq 1.45\% \quad (11)$$

$$([C]_w + 1.5 \times [N]_w) \times ([V]_w + 10 \times [Nb]_w - [Al]_w)/([Mn]_w + 0.1 \times [Mn]_F + [Ni]_w + [Ni]_F) \times 100 \geq 5\% \qquad (12)$$

The relational formula (9) is entirely the same as the relational formula (1) described in the second embodiment.

The numerical range of the relational formula (10) is broader than that of the relational formula (2), but the reason for defining the former is the same as that for defining the relational formula (2) in the second embodiment. Namely, the relational formula (10) is to consider the yield of Ni in the wire and the flux in the third embodiment. Ni lowers the solidification finish temperature therefore often causing a risk or increasing hot cracking susceptibility. Accordingly, as shown by the relational formula (10) in the third embodiment, the value to be calculated is preferably 0.70% or less. The value calculated by the relational formula (10) is more preferably 0.50% or less. Even more preferably, the value calculated by the relational formula (10) is 0.30% or less.

The numerical range of the relational formula (11) is broader than that of the relational formula (3), but the reason for defining the former is the same as that for defining the relational formula (3) in the second embodiment. Namely, the relational formula (11) is to consider the yield of Mn and Ni in the wire and the flux in the third embodiment. From the viewpoint of securing toughness, the lower limit of the total amount of the contained Mn amount and the contained Ni amount is preferably defined, and from the viewpoint of reducing δ-ferrite phase and securing creep strength, the upper limit of the total amount of the contained Mn amount and the contained Ni amount is preferably defined. Accordingly, as shown by the relational formula (11) in the third embodiment, the value to be calculated is preferably 0.60% to 1.45%. The lower limit of the value calculated by the relational formula (11) in the third embodiment is preferably 0.70%. The upper limit of the value calculated by the relational formula (11) in the third embodiment is preferably 1.35%.

The reason for defining the relational formula (12) is the same as that for the relational formula (8). The relational formula (12) is to further consider the Mn and Ni yield in the wire and the flux in the relational formula (8). When the relational formula (12) is satisfied, creep strength may hardly lower in long-term PWHT even in the case of welding by combination of the wire and the flux in production of reactors, etc. Namely, the wire and the flux satisfying the relational formula (12) are favorably used for production of reactors.

(Co)

The wire of the third embodiment may contain Co: 0.05 to 0.80%, like in the second embodiment. The meaning of containing Co and the reason for defining the content thereof are as described in the section of the second embodiment.

In the case where the wire of the third embodiment contains Co, the flux mentioned above can be used in combination. In such a case, the following relational formula (13) is preferably satisfied. $[Co]_W$ is the Co amount (%) of the wire components. $[V]_W$, $[Nb]_W$, $[C]_W$, $[N]_W$, $[Ni]_W$, $[Mn]_W$ and $[Al]_W$ are the same as those in the relational formula (8), and $[Mn]_F$ and $[Ni]_F$ are the same as those in the relational formula (12).

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F + [Co]_W) \times 100 \geq 5\% \qquad (13)$$

The reason for defining the relational formula (13) is the same as that for the relational formula (8). The relational formula (13) is to consider the yield of Mn and Ni in the wire and the flux and the yield of Co in the wire in the relational formula (8). When the relational formula (13) is satisfied, creep strength may hardly lower in long-term PWHT even in the case of welding by combination of the wire and the flux in production of reactors, etc. Namely, the wire and the flux satisfying the relational formula (13) are favorably used for production of reactors.

(Submerged arc welding method for third embodiment)

The submerged arc welding method for the third embodiment may be carried out by combining the wire and the flux described in the third embodiment. In the submerged arc welding method for the third embodiment, for example, the same conditions as those for the second embodiment mentioned above may be used.

The submerged arc welding method for the third embodiment uses a combination of the wire and the flux described in the third embodiment and is therefore excellent in creep performance, toughness, cracking resistance and welding workability. In addition, when welded by the submerged arc welding method for the third embodiment, the creep strength of the resultant weld hardly lowers in long-term PWHT. Accordingly, the submerged arc welding method for the third embodiment is especially favorably applicable to production of reactors.

Examples

[First Example]

With reference to Examples and Comparative Examples given hereinunder to demonstrate the advantageous effects of the present invention, the contents of the present invention are described concretely.

A wire having the chemical components shown in Table 1 and the flux having the chemical components shown in Table 2 were produced.

The weld wire was, after melted in a high-frequency melting furnace, extruded, annealed and drawn to be 2.4 mmϕ. Wire No. 1 to No. 13 are examples of the invention and Wire No. 14 to No. 37 are comparative examples.

For the flux, prescribed raw materials (fluoride, metal carbonate-containing ore powder, molten flux) were mixed and stirred, then granulated using water glass, and sintered at 500°C for about 1 hour. Flux No. 1 to No. 5 are examples of the invention and Flux No. 6 to No. 10 are comparative examples. In Tables 1 and 2, "-" indicates less than the detection 1imit.

Table 1

| Wire No. | Chemical Components (mass%) (remainder: Fe and unavoidable impurities) | | | | | | | | | | | | | | | | | |
| --- | --- | --- | --- | --- | --- | --- | --- | --- | --- | --- | --- | --- | --- | --- | --- | --- | --- | --- |
| | C | Si | Mn | Ni | Mn+Ni | S | Mn/S | P | Cu | Cr | Mo | V | Al | B | Nb | Co | N | O |
| 1 | 0.10 | 0.31 | 0.53 | 0.14 | 0.67 | 0.005 | 106 | 0.002 | 0.05 | 8.80 | 1.03 | 0.21 | 0.01 | 0.0001 | 0.05 | 0.30 | 0.05 | 0.003 |
| 2 | 0.09 | 0.18 | 0.70 | 0.39 | 1.09 | 0.004 | 175 | 0.003 | 0.04 | 9.45 | 0.95 | 0.18 | 0.02 | 0.0001 | 0.06 | 0.25 | 0.05 | 0.002 |
| 3 | 0.12 | 0.23 | 0.80 | 0.19 | 0.99 | 0.004 | 200 | 0.002 | 0.03 | 8.54 | 0.99 | 0.21 | 0.01 | 0.0002 | 0.08 | 0.34 | 0.06 | 0.001 |
| 4 | 0.11 | 0.28 | 0.51 | 0.14 | 0.65 | 0.004 | 128 | 0.005 | 0.06 | 8.70 | 1.03 | 0.20 | 0.01 | 0.0002 | 0.06 | 0.30 | 0.04 | 0.002 |
| 5 | 0.10 | 0.31 | 0.95 | 0.11 | 1.06 | 0.005 | 190 | 0.002 | 0.10 | 8.21 | 0.96 | 0.26 | 0.03 | 0.0001 | 0.04 | 0.25 | 0.04 | 0.002 |
| 6 | 0.12 | 0.24 | 0.83 | 0.19 | 1.02 | 0.010 | 87 | 0.003 | 0.07 | 8.90 | 0.90 | 0.21 | 0.01 | 0.0003 | 0.06 | 0.10 | 0.04 | 0.001 |
| 7 | 0.10 | 0.30 | 0.52 | 0.13 | 0.65 | 0.003 | 173 | 0.003 | 0.02 | 8.80 | 1.02 | 0.21 | 0.02 | 0.0001 | 0.04 | 0.32 | 0.05 | 0.004 |
| 8 | 0.10 | 0.23 | 0.72 | 0.16 | 0.88 | 0.007 | 103 | 0.002 | 0.09 | 8.92 | 1.02 | 0.22 | 0.01 | 0.0002 | 0.06 | 0.43 | 0.05 | 0.003 |
| 9 | 0.08 | 0.43 | 0.50 | - | 0.50 | 0.004 | 125 | 0.003 | 0.01 | 9.31 | 1.01 | 0.19 | 0.02 | 0.0002 | 0.04 | 0.38 | 0.07 | 0.005 |
| 10 | 0.11 | 0.30 | 0.53 | 0.14 | 0.67 | 0.004 | 133 | 0.003 | 0.03 | 8.46 | 1.02 | 0.21 | 0.01 | 0.0003 | 0.04 | 0.31 | 0.04 | 0.002 |
| 11 | 0.10 | 0.08 | 0.25 | 0.28 | 0.53 | 0.002 | 125 | 0.006 | 0.03 | 8.88 | 0.95 | 0.22 | 0.02 | 0.0004 | 0.07 | 0.15 | 0.06 | 0.002 |
| 12 | 0.11 | 0.24 | 0.79 | 0.31 | 1.10 | 0.004 | 198 | 0.003 | 0.04 | 9.56 | 1.05 | 0.24 | 0.01 | 0.0002 | 0.06 | 0.68 | 0.06 | 0.001 |
| 13 | 0.08 | 0.15 | 0.85 | 0.11 | 0.96 | 0.004 | 213 | 0.005 | 0.05 | 9.08 | 0.98 | 0.22 | 0.02 | 0.0002 | 0.04 | - | 0.05 | 0.005 |
| 14 | 0.16 | 0.32 | 0.92 | 0.15 | 1.07 | 0.005 | 184 | 0.004 | 0.06 | 9.30 | 0.94 | 0.18 | 0.03 | 0.0002 | 0.05 | 0.15 | 0.05 | 0.003 |
| 15 | 0.11 | 0.04 | 0.72 | 0.38 | 1.10 | 0.003 | 240 | 0.003 | 0.10 | 8.45 | 1.11 | 0.25 | 0.01 | 0.0001 | 0.03 | 0.09 | 0.06 | 0.002 |
| 16 | 0.11 | 0.76 | 0.92 | 0.11 | 1.03 | 0.005 | 184 | 0.002 | 0.03 | 10.45 | 0.99 | 0.22 | 0.02 | 0.0003 | 0.06 | 0.22 | 0.06 | 0.004 |
| 17 | 0.13 | 0.44 | 0.18 | 0.46 | 0.64 | 0.002 | 90 | 0.005 | 0.07 | 8.22 | 1.09 | 0.16 | 0.02 | 0.0002 | 0.05 | 0.24 | 0.06 | 0.003 |
| 18 | 0.10 | 0.17 | 1.43 | 0.06 | 1.49 | 0.006 | 238 | 0.006 | 0.09 | 9.23 | 1.01 | 0.21 | 0.04 | 0.0003 | 0.06 | 0.32 | 0.04 | 0.004 |
| 19 | 0.13 | 0.26 | 0.46 | 0.72 | 1.18 | 0.003 | 153 | 0.004 | 0.11 | 9.34 | 0.96 | 0.23 | 0.02 | 0.0001 | 0.05 | 0.21 | 0.06 | 0.002 |
| 20 | 0.11 | 0.22 | 0.52 | 0.03 | 0.55 | 0.003 | 173 | 0.003 | 0.15 | 9.78 | 0.90 | 0.24 | 0.01 | 0.0002 | 0.04 | 0.15 | 0.04 | 0.001 |
| 21 | 0.11 | 0.33 | 1.12 | 0.68 | 1.80 | 0.004 | 280 | 0.003 | 0.04 | 8.21 | 1.01 | 0.21 | 0.02 | 0.0003 | 0.05 | 0.08 | 0.04 | 0.001 |
| 22 | 0.08 | 0.21 | 0.82 | 0.26 | 1.08 | 0.016 | 51 | 0.006 | 0.03 | 8.98 | 0.97 | 0.18 | 0.02 | 0.0003 | 0.07 | 0.22 | 0.06 | 0.002 |
| 23 | 0.11 | 0.27 | 0.65 | 0.19 | 0.84 | 0.009 | 72 | 0.002 | 0.03 | 9.20 | 1.05 | 0.23 | 0.02 | 0.0002 | 0.04 | 0.31 | 0.06 | 0.004 |
| 24 | 0.11 | 0.28 | 0.83 | 0.30 | 1.13 | 0.005 | 166 | 0.019 | 0.10 | 8.78 | 0.92 | 0.18 | 0.01 | 0.0003 | 0.08 | 0.15 | 0.07 | 0.003 |

(continued)

| Wire No. | Chemical Components (mass%) (remainder: Fe and unavoidable impurities) | | | | | | | | | | | | | | | | | |
|---|---|---|---|---|---|---|---|---|---|---|---|---|---|---|---|---|---|---|
| | C | Si | Mn | Ni | Mn+Ni | S | Mn/S | P | Cu | Cr | Mo | V | Al | B | Nb | Co | N | O |
| 25 | 0.11 | 0.15 | 0.95 | 0.03 | 0.98 | 0.006 | 158 | 0.005 | 0.45 | 8.90 | 0.99 | 0.19 | 0.02 | 0.0001 | 0.05 | 0.06 | 0.06 | 0.005 |
| 26 | 0.12 | 0.16 | 0.61 | 0.19 | 0.80 | 0.003 | 203 | 0.002 | 0.10 | 7.78 | 0.88 | 0.26 | 0.02 | 0.0003 | 0.08 | 0.22 | 0.06 | 0.002 |
| 27 | 0.11 | 0.24 | 0.45 | 0.41 | 0.86 | 0.004 | 113 | 0.001 | 0.02 | 10.92 | 1.05 | 0.21 | 0.03 | 0.0002 | 0.04 | 0.44 | 0.05 | 0.001 |
| 28 | 0.11 | 0.29 | 0.72 | 0.39 | 1.11 | 0.003 | 240 | 0.003 | 0.01 | 9.89 | 0.77 | 0.27 | 0.02 | 0.0001 | 0.05 | 0.15 | 0.05 | 0.002 |
| 29 | 0.10 | 0.23 | 0.92 | 0.14 | 1.06 | 0.005 | 184 | 0.005 | 0.05 | 8.44 | 1.29 | 0.22 | 0.02 | 0.0003 | 0.04 | 0.09 | 0.05 | 0.003 |
| 30 | 0.10 | 0.22 | 0.77 | 0.29 | 1.06 | 0.002 | 385 | 0.003 | 0.20 | 9.10 | 0.98 | 0.11 | 0.01 | 0.0002 | 0.04 | 0.06 | 0.05 | 0.002 |
| 31 | 0.13 | 0.27 | 0.74 | 0.34 | 1.08 | 0.003 | 247 | 0.005 | 0.13 | 9.22 | 1.01 | 0.39 | 0.01 | 0.0002 | 0.05 | 0.10 | 0.06 | 0.003 |
| 32 | 0.12 | 0.30 | 0.83 | 0.34 | 1.17 | 0.004 | 208 | 0.007 | 0.21 | 8.84 | 1.06 | 0.23 | 0.07 | 0.0001 | 0.06 | 0.05 | 0.07 | 0.002 |
| 33 | 0.11 | 0.43 | 0.71 | 0.09 | 0.80 | 0.004 | 178 | 0.002 | 0.05 | 8.19 | 0.92 | 0.18 | 0.01 | 0.0033 | 0.04 | 0.23 | 0.05 | 0.001 |
| 34 | 0.09 | 0.29 | 0.52 | 0.33 | 0.85 | 0.003 | 173 | 0.004 | 0.03 | 8.69 | 1.06 | 0.24 | 0.02 | 0.0003 | 0.01 | 0.18 | 0.05 | 0.002 |
| 35 | 0.10 | 0.35 | 0.83 | 0.06 | 0.89 | 0.005 | 166 | 0.007 | 0.01 | 9.24 | 0.91 | 0.18 | 0.02 | 0.0002 | 0.16 | 0.22 | 0.05 | 0.002 |
| 36 | 0.13 | 0.32 | 0.60 | 0.23 | 0.83 | 0.004 | 150 | 0.001 | 0.06 | 10.26 | 1.09 | 0.16 | 0.02 | 0.0002 | 0.02 | 0.23 | 0.02 | 0.002 |
| 37 | 0.10 | 0.35 | 0.66 | 0.05 | 0.71 | 0.004 | 165 | 0.005 | 0.09 | 10.44 | 0.92 | 0.27 | 0.01 | 0.0006 | 0.04 | 0.22 | 0.06 | 0.047 |

Table 2

| Flux No. | Chemical Components (mass%) | | | | | | | | | | | | | | |
|---|---|---|---|---|---|---|---|---|---|---|---|---|---|---|---|
| | Metal Fluoride | Metal Carbonate | $SiO_2$ | MgO | $Al_2O_3$ | $ZrO_2$ | $TiO_2$ | Total*1 | Mn | Ni | S | Ca | Si | Al | Total*2 |
| 1 | 9.5 | 6.5 | 12.5 | 20.4 | 21.1 | 1.8 | - | 43.3 | 0.7 | - | 0.005 | 0.4 | 0.8 | - | 1.2 |
| 2 | 6.5 | 8.9 | 15.9 | 18.6 | 23.7 | 2.1 | - | 44.4 | - | 0.09 | 0.006 | 1.0 | 0.7 | - | 1.7 |
| 3 | 8.9 | 4.2 | 10.9 | 29.1 | 20.1 | 2.6 | - | 51.8 | 1.9 | - | 0.007 | 0.4 | 0.4 | - | 0.8 |
| 4 | 5.7 | 7.9 | 12.1 | 28.4 | 11.5 | 1.2 | 0.1 | 41.2 | 1.0 | - | 0.009 | 0.4 | 1.0 | 0.1 | 1.5 |
| 5 | 8.2 | 5.7 | 14.1 | 30.9 | 19.5 | 3.2 | - | 53.6 | - | - | 0.005 | 0.4 | 0.8 | - | 1.2 |
| 6 | 7.6 | 4.7 | 11.3 | 26.5 | 23.1 | 1.5 | - | 51.1 | 3.0 | - | 0.007 | 0.4 | 0.4 | - | 0.8 |
| 7 | 9.7 | 5.1 | 8.4 | 30.5 | 18.1 | 1.9 | - | 50.5 | - | 0.18 | 0.007 | 0.4 | 0.4 | - | 0.8 |
| 8 | 9.5 | 6.5 | 12.5 | 20.4 | 21.1 | 1.8 | - | 43.3 | - | - | 0.028 | 0.4 | 0.4 | - | 0.8 |
| 9 | 8.1 | 4.7 | 11.6 | 33.4 | 19.5 | 2.6 | - | 55.5 | 1.0 | - | 0.007 | 0.1 | 0.2 | - | 0.3 |
| 10 | 9.5 | 3.6 | 14.5 | 26.3 | 23.7 | 2.0 | - | 52.0 | - | 0.08 | 0.006 | 1.8 | 0.9 | - | 2.7 |

*1) total of MgO, $Al_2O_3$ and $ZrO_2$
*2) total of Ca, Si and Al

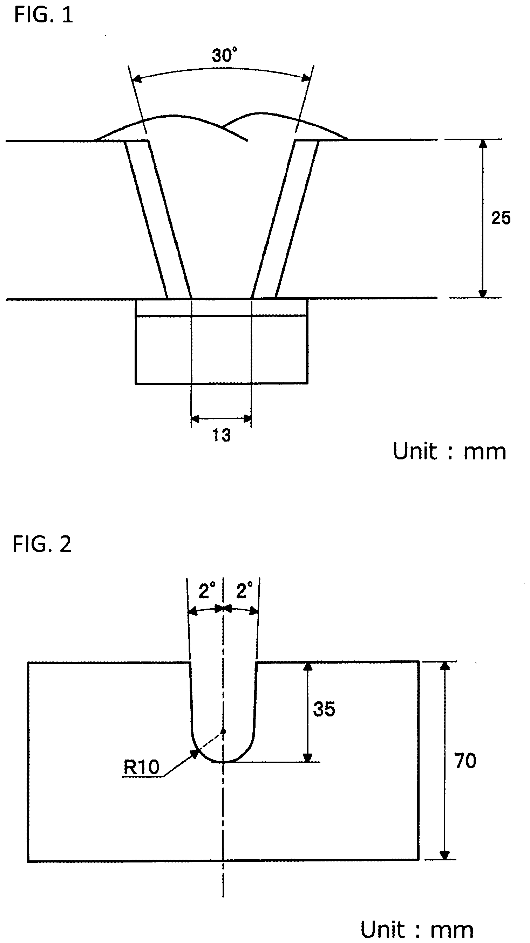

The wire of No. 1 to No. 37 shown in Table 1 and the flux of No. 1 to No. 10 shown in Table 2 were combined as shown in Table 4, and welded. As the welding power source, Daihen's KRUMC-1000 having a drooping characteristic was used. Table 3 shows the submerged arc welding condition. FIG. 1 shows the shape of a groove of the test plate used in the welt test. For the matrix of the test plate, ASTM A387 Gr.22 was used. The inner surface of the groove was buttered to be in a thickness of 10 mm or so with the wire. The welding mode was 1-layer 2-pass lamination from the initial layer, and as a confirmation test for the welding workability, the appearance of beads and the slag peelability in the final layer were evaluated.

Table 3

| Wire Diameter | Polarity | Welding Current | Arc Voltage | Welding Speed | Welding Heat Input | Mode of Lamination | Wire Supply Speed |
|---|---|---|---|---|---|---|---|
| 2.4 mm | AC | 400 A | 30 V | 36 cpm | 20 kJ/cm | 7-layer 14-pass | 105 to 115 g/min |

| Flux Drying Condition | Flux Spray Height | Torch Angle | Chip/Matrix Distance | Preheating/Interpass Temperature | | |
|---|---|---|---|---|---|---|
| 250°C × 1 hr | 25 mm | 0° | 25 mm | 200 to 250°C | | |

After formed, the weld test piece was subjected to PWHT at 760°C × 4 hrs. The creep performance and the impact performance of the weld metal part of the weld test piece were evaluated. The test piece was taken from the deposition center (weld metal center) and the plate center.

(Welding Workability)

In the welding workability confirmation test, the samples excellent in the appearance of beads and easy in slag peeling were evaluated as "A", those poor in the appearance of beads and difficult in slag peeling owing to slag adhesion were evaluated as "B". "A" is acceptable, and "B" is rejected.

(Hot Cracking Resistance)

A U-groove shown in FIG. 2 was processed for 2-layer 3-pass welding, and checked for cracking in the final pass. For the matrix of the test plate, ASTM A387 Gr.91 was used. Regarding the evaluation method for cracking, the test plate was tested for liquid penetrant examination testing and the surface thereof was checked for cracking in accordance with JIS Z 2343:2001. The samples with no cracking were evaluated as "A", and those with cracking were evaluated as "B". "A" is acceptable, and "B" is rejected.

(Toughness)

Entire weld metal was tested in a Charpy impact test in accordance with JIS Z 2242:2005 for evaluating the toughness thereof.

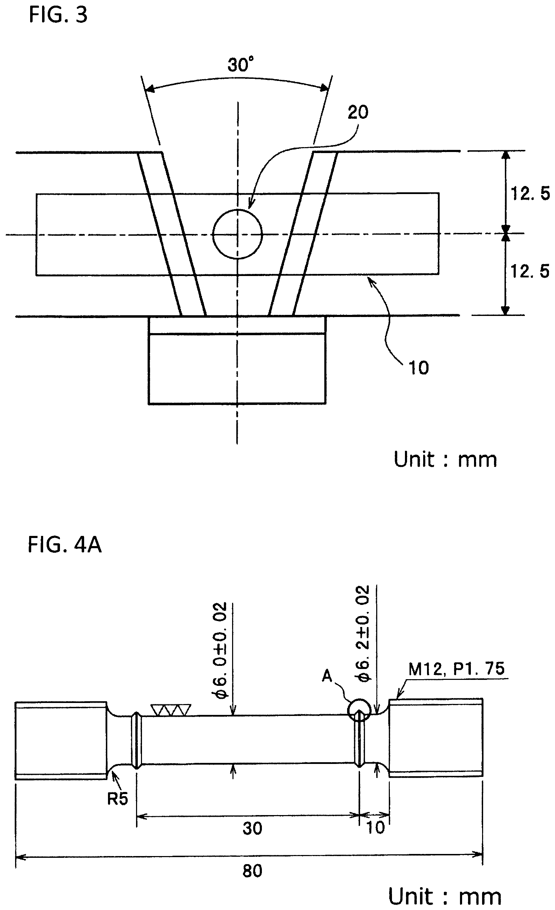

For evaluating the toughness of entire weld metal, a Charpy impact test piece having a 10-mm angle 2-mm V-notch (side notch) in accordance with AWS B4.0 in the normal direction (joint direction) to the weld line from the center of the thickness of the weld metal was prepared. The test temperature was 20°C, and three test pieces were tested in one test, and the data thereof were averaged to give an average value. FIG. 3 shows a position 10 at which a Charpy impact test piece was taken and a position 20 at which a creep test piece was taken.

Regarding the toughness of entire weld metal, the samples having a 3-point average of 65 J or more of the absorption energy (vE + 20°C) in the Charpy impact test at 20°C were evaluated as "A", those having 45 J or more and less than 65 J were evaluated as "B", and those having less than 45 J were evaluated as "C". A and B are acceptable, and C is rejected.

(Creep Performance)

Entire weld metal was tested in a creep test in accordance with JIS Z 2271:2010 for evaluating the creep performance thereof.

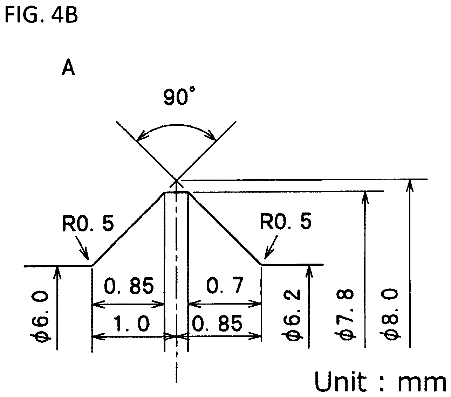

For evaluating the creep performance of entire weld metal, a creep test piece (test piece diameter: $\phi$6.0 mm, length of parallel parts: 30.0 mm) in the weld line direction from the center of the thickness of the weld metal was prepared. FIG. 4A and FIG. 4B show the shape of the creep test piece.

In the creep test, the test temperature was 650°C and the initial load stress was 100 MPa. The samples having a creep rupture time (Tr) of 1000 hours or more were evaluated as "A", those having 600 hours or more and less than 1000 hours were as "B", and those having less than 600 hours were as "C". A and B are acceptable, and C is rejected.

Table 4 shows combinations of a wire and a flux used for welding, and the evaluation results of welding workability, hot cracking resistance, toughness and creep performance. In Table 4, "-" indicates that the element relating to the relational formula was less than the detection limit and therefore could not be calculated.

Here, the samples having an evaluation result of "A" for the welding workability and the hot cracking resistance and having an evaluation result of "A" for the toughness and the creep performance were evaluated to have a comprehensive evaluation of "A".

The samples having an evaluation result of "A" for the welding workability and the hot cracking resistance and having an evaluation result of "B" for the toughness and the creep performance were evaluated to have a comprehensive evaluation of "B".

The samples having an evaluation result of "rejection" for at least one of the welding workability, the hot cracking resistance, the toughness and the creep performance were evaluated to have a comprehensive evaluation of "C".

During the present investigations, the inventors hit new findings relating to the relation between Mn and Ni in the wire and the flux (that is, predetermined relational formulae), and those findings are also shown below.

Table 4f

| Weld Test Piece No. | Wire No. | Flux No. | Relational Formula (1) *1 | Relational Formula (2) *2 | Relational Formula (3) *3 | Welding Workability | Hot Cracking Resistance | Toughness | | Creep Performance | | Comprehensive Evaluation |
|---|---|---|---|---|---|---|---|---|---|---|---|---|
| | | | | | | | | vE+20°C [J] | Result | Tr [hrs] | Result | |
| 1 | 1 | 3 | 0.72 | 0.14 | 0.86 | A | A | 70 | A | 1219 | A | A |
| 2 | 2 | 1 | 0.77 | 0.39 | 1.16 | A | A | 82 | A | 1055 | A | A |
| 3 | 3 | 4 | 0.99 | 0.19 | 1.18 | A | A | 81 | A | 1356 | A | A |
| 4 | 4 | 3 | 0.70 | 0.14 | 0.84 | A | A | 74 | A | 1246 | A | A |
| 5 | 5 | 1 | 1.02 | 0.11 | 1.13 | A | A | 88 | A | 712 | B | B |
| 6 | 6 | 2 | 0.83 | 0.28 | 1.11 | A | A | 71 | A | 1321 | A | A |
| 7 | 7 | 3 | 0.71 | 0.13 | 0.84 | A | A | 111 | A | 1012 | A | A |
| 8 | 8 | 4 | 0.82 | 0.16 | 0.98 | A | A | 67 | A | 1115 | A | A |
| 9 | 9 | 1 | 0.57 | - | 0.57 | A | A | 53 | B | 1412 | A | A |
| 10 | 10 | 3 | 0.72 | 0.14 | 0.86 | A | A | 73 | A | 1057 | A | A |
| 11 | 11 | 2 | 0.25 | 0.37 | 0.62 | A | A | 55 | B | 1223 | A | B |
| 12 | 11 | 5 | 0.25 | 0.28 | 0.53 | A | A | 46 | B | 1435 | A | B |
| 13 | 12 | 3 | 0.98 | 0.31 | 1.29 | A | A | 81 | A | 682 | B | B |
| 14 | 13 | 2 | 0.85 | 0.20 | 1.05 | A | A | 73 | A | 651 | B | B |
| 15 | 14 | 2 | 0.92 | 0.24 | 1.16 | A | B | 21 | C | 2781 | A | C |
| 16 | 15 | 1 | 0.79 | 0.38 | 1.17 | B | A | 43 | C | 475 | C | C |
| 17 | 16 | 1 | 0.99 | 0.11 | 1.10 | A | A | 32 | C | 704 | B | C |
| 18 | 17 | 2 | 0.18 | 0.55 | 0.73 | A | A | 36 | C | 755 | B | C |
| 19 | 18 | 2 | 1.43 | 0.15 | 1.58 | A | A | 107 | A | 389 | C | C |
| 20 | 19 | 4 | 0.56 | 0.72 | 1.28 | A | A | 116 | A | 365 | C | C |
| 21 | 20 | 4 | 0.62 | 0.03 | 0.65 | A | A | 28 | C | 1281 | A | C |
| 22 | 21 | 2 | 1.12 | 0.77 | 0.89 | A | A | 135 | A | 297 | C | C |
| 23 | 22 | 2 | 0.82 | 0.35 | 1.17 | A | B | 25 | C | 654 | B | C |

(continued)

| Weld Test Piece No. | Wire No. | Flux No. | Relational Formula (1) *1 | Relational Formula (2) *2 | Relational Formula (3) *3 | Welding Workability | Hot Cracking Resistance | Toughness vE+20°C [J] | Toughness Result | Creep Performance Tr [hrs] | Creep Performance Result | Comprehensive Evaluation |
|---|---|---|---|---|---|---|---|---|---|---|---|---|
| 24 | 23 | 2 | 0.65 | 0.28 | 0.93 | A | B | 53 | B | 785 | B | C |
| 25 | 24 | 3 | 1.02 | 0.30 | 1.32 | A | B | 18 | C | 818 | B | C |
| 26 | 25 | 3 | 1.14 | 0.03 | 1.17 | A | A | 31 | C | 745 | B | C |
| 27 | 26 | 1 | 0.68 | 0.19 | 0.87 | A | A | 64 | B | 473 | C | C |
| 28 | 27 | 1 | 0.52 | 0.41 | 0.93 | B (much scorched) | B | 29 | C | 382 | C | C |
| 29 | 28 | 3 | 0.91 | 0.39 | 1.30 | A | A | 69 | A | 554 | C | C |
| 30 | 29 | 3 | 1.11 | 0.14 | 1.25 | A | A | 24 | C | 1050 | A | C |
| 31 | 30 | 4 | 0.87 | 0.29 | 1.16 | A | A | 71 | A | 469 | C | C |
| 32 | 31 | 4 | 0.84 | 0.34 | 1.18 | A | A | 17 | C | 1154 | A | C |
| 33 | 32 | 1 | 0.90 | 0.34 | 1.24 | B | A | 42 | C | 515 | C | C |
| 34 | 33 | 1 | 0.78 | 0.09 | 0.87 | A | B | 96 | A | 1223 | A | C |
| 35 | 34 | 3 | 0.71 | 0.33 | 1.04 | A | A | 145 | A | 278 | C | C |
| 36 | 35 | 3 | 1.02 | 0.06 | 1.08 | B (much scorched) | A | 19 | C | 1658 | A | C |
| 37 | 36 | 1 | 0.67 | 0.23 | 0.90 | A | A | 95 | A | 295 | C | C |
| 38 | 37 | 2 | 0.66 | 0.14 | 0.80 | A | A | 34 | C | 727 | B | C |
| 39 | 5 | 6 | 1.25 | 0.11 | 1.36 | A | A | 97 | A | 512 | C | C |
| 40 | 11 | 7 | 0.25 | 0.46 | 0.71 | A | A | 91 | A | 574 | C | C |
| 41 | 6 | 8 | 0.83 | 0.19 | 1.02 | A | B | 54 | B | 1212 | A | C |
| 42 | 1 | 9 | 0.63 | 0.14 | 0.77 | B (many pock marks) | A | 78 | A | 1151 | A | C |

| Weld Test Piece No. | Wire No. | Flux No. | Relational Formula (1) *1 | Relational Formula (2) *2 | Relational Formula (3) *3 | Welding Workability | Hot Cracking Resistance | Toughness | | Creep Performance | | Comprehensive Evaluation |
|---|---|---|---|---|---|---|---|---|---|---|---|---|
| | | | | | | | | vE+20°C [J] | Result | Tr [hrs] | Result | |
| 43 | 4 | 10 | 0.51 | 0.22 | 0.73 | B (much scorched) | A | 56 | B | 1042 | A | C |
| *1 to 3) Values calculated in accordance with the relational formulae (1) to (3) where [Mn]w is the Mn amount (mass%) of the wire components and [Ni]w is the Ni amount (mass%) of the wire components, and $[Mn]_F$ is the Mn amount (mass%) of the flux components and $[Ni]_F$ is the Ni amount (mass%) of the flux components: Relational formula (1): $[Mn]_W + 0.1 \times [Mn]_F$; Relational formula (2): $[Ni]_W + [Ni]_F$ ; Relational formula (3): $[Mn]_W + 0.1 \times [Mn]_F + [Ni]_W + [Ni]_F$ | | | | | | | | | | | | |

The weld test pieces of No. 1 to No. 14 in Table 4 satisfied the requirements in the present invention and were excellent in welding workability, hot cracking resistance, toughness and creep performance (Examples).

In particular, in the welt test pieces of No. 1 to No. 4, No. 6 to No. 8 and No. 10, the wire components and the flux components were preferred ones satisfying the following relational formulae (1) to (3) where $[Mn]_W$ is the Mn amount (% (mass%, the same shall apply hereinunder)) of the wire components and $[Ni]_W$ is the Ni amount (%) of the wire components , and $[Mn]_F$ is the Mn amount (%) of the flux components and $[Ni]_F$ is the Ni amount (%) of the flux components. In particular, these weld test pieces satisfied the relational formula (1) and contained Co as one component of the wire.

$$0.55\% \leq [Mn]_W + 0.1 \times [Mn]_F \leq 1.00\% \qquad (1)$$

$$[Ni]_W + [Ni]_F \leq 0.50\% \qquad (2)$$

$$0.60\% \leq [Mn]_W + 0.1 \times [Mn]_F + [Ni]_W + [Ni]_F \leq 1.15\% \qquad (3)$$

Consequently, of the weld test pieces of No. 1 to No. 4, No. 6 to No. 8 and No. 10, the evaluation result of hot cracking resistance was "A", the evaluation result of toughness and creep performance was "A", and the comprehensive evaluation was "A". Namely, these were found to be preferred embodiments.

On the other hand, the weld test pieces of No. 15 to No. 43 did not satisfy the requirements in the present invention and were therefore poor in any of the evaluation results of welding workability, hot cracking resistance, toughness and creep performance (Comparative Examples). The comprehensive evaluation of these was "C".

Specifically, the weld test piece of No. 15 uses the wire of Wire No. 14 in Table 1. In the weld test piece of No. 15, the C amount in the wire was too much, and therefore the test piece was poor in hot cracking resistance and toughness.

The weld test piece of No. 16 uses the wire of Wire No. 15 in Table 1. In the weld test piece of No. 16, the Si amount in the wire was too small, and therefore the test piece was poor in welding workability, toughness and creep performance.

The weld test piece of No. 17 uses the wire of Wire No. 16 in Table 1. In the weld test piece of No. 17, the Si amount in the wire was too much, and therefore the test piece was poor in toughness.

The weld test piece of No. 18 uses the wire of Wire No. 17 in Table 1. In the weld test piece of No. 18, the Mn amount in the wire was too small, and therefore the test piece was poor in toughness.

The weld test piece of No. 19 uses the wire of Wire No. 18 in Table 1. In the weld test piece of No. 19, the Mn amount in the wire was too much, and therefore the test piece was poor in creep performance. The wire of Wire No. 18 is an example in which the total amount (Mn + Ni amounts) of the Mn amount and the Ni amount, the Mn and Ni being contained in the wire, satisfies claim 1 but does not satisfy claim 2.

The weld test piece of No. 20 uses the wire of Wire No. 19 in Table 1. In the weld test piece of No. 20, the Ni amount in the wire was too much, and therefore the test piece was poor in creep performance. The wire of Wire No. 19 is an example in which the Mn + Ni amount satisfies claim 1 but does not satisfy claim 2.

The weld test piece of No. 21 uses the wire of Wire No. 20 in Table 1. In the weld test piece of No. 21, the total amount (Mn + Ni amounts) of the Mn amount and the Ni amount, the Mn and Ni being contained in the wire, was too small, and therefore the test piece was poor in toughness.

The weld test piece of No. 22 uses the wire of Wire No. 21 in Table 1. In the weld test piece of No. 22, the Mn + Ni amount in the wire was too much, and therefore the test piece was poor in creep performance. The wire of Wire No. 21 is an example in which the Mn amount and the Ni amount each satisfy claim 1 but do not satisfy claim 2.

The weld test piece of No. 23 uses the wire of Wire No. 22 in Table 1. In the weld test piece of No. 23, the S amount in the wire was too much and the ratio (Mn/S) of the Mn amount to the S amount, the Mn and S being contained in the wire, was too low, and therefore the test piece was poor in hot cracking resistance and toughness.

The weld test piece of No. 24 uses the wire of Wire No. 23 in Table 1. In the weld test piece of No. 24, the ratio Mn/S in the wire was too low, and therefore the test piece was poor in hot cracking resistance.

The weld test piece of No. 25 uses the wire of Wire No. 24 in Table 1. In the weld test piece of No. 25, the P amount in the wire was too much, and therefore the test piece was poor in hot cracking resistance and toughness.

The weld test piece of No. 26 uses the wire of Wire No. 25 in Table 1. In the weld test piece of No. 26, the Cu amount in the wire was too much, and therefore the test piece was poor in toughness.

The weld test piece of No. 27 uses the wire of Wire No. 26 in Table 1. In the weld test piece of No. 27, the Cr amount in the wire was too small, and therefore the test piece was poor in creep performance.

The weld test piece of No. 28 uses the wire of Wire No. 27 in Table 1. In the weld test piece of No. 28, the Cr amount in the wire was too much, and therefore the test piece was poor in hot cracking resistance, toughness and creep performance. In addition, the weld test piece of No. 28 much scorched and was poor in slag peelability. Consequently, the weld test piece of No. 28 was poor in welding workability.

The weld test piece of No. 29 uses the wire of Wire No. 28 in Table 1. In the weld test piece of No. 29, the Mo amount in the wire was too small, and therefore the test piece was poor in creep performance.

The weld test piece of No. 30 uses the wire of Wire No. 29 in Table 1. In the weld test piece of No. 30, the Mo amount in the wire was too much, and therefore the test piece was poor in toughness.

The weld test piece of No. 31 uses the wire of Wire No. 30 in Table 1. In the weld test piece of No. 31, the V amount in the wire was too small, and therefore the test piece was poor in creep performance.

The weld test piece of No. 32 uses the wire of Wire No. 31 in Table 1. In the weld test piece of No. 32, the V amount in the wire was too much, and therefore the test piece was poor in toughness.

The weld test piece of No. 33 uses the wire of Wire No. 32 in Table 1. In the weld test piece of No. 33, the Al amount in the wire was too much, and therefore the test piece was poor in welding workability, toughness and creep performance. The wire of Wire No. 32 is an example that satisfies claim 1 in point of the Mn + Ni amount therein but does not satisfy claim 2.

The weld test piece of No. 34 uses the wire of Wire No. 33 in Table 1. In the weld test piece of No. 34, the B amount in the wire was too much, and therefore the test piece was poor in hot cracking resistance.

The weld test piece of No. 35 uses the wire of Wire No. 34 in Table 1. In the weld test piece of No. 35, the Nb amount in the wire was too small, and therefore the test piece was poor in creep performance.

The weld test piece of No. 36 uses the wire of Wire No. 35 in Table 1. In the weld test piece of No. 36, the Nb amount in the wire was too much, and therefore the test piece was poor in toughness. In addition, the weld test piece of No. 36 much scorched and was poor in slag peelability. Consequently, the weld test piece of No. 36 was poor in welding workability.

The weld test piece of No. 37 uses the wire of Wire No. 36 in Table 1. In the weld test piece of No. 37, the N amount in the wire was too small, and therefore the test piece was poor in creep performance.

The weld test piece of No. 38 uses the wire of Wire No. 37 in Table 1. In the weld test piece of No. 38, the O amount in the wire was too much, and therefore the test piece was poor in toughness.

The weld test piece of No. 39 uses the flux of Flux No. 6 in Table 2. In the weld test piece of No. 39, the Mn amount in the flux was too much, and therefore the test piece was poor in creep performance.

The weld test piece of No. 40 uses the flux of Flux No. 7 in Table 2. In the weld test piece of No. 40, the Ni amount in the flux was too much, and therefore the test piece was poor in creep performance.

The weld test piece of No. 41 uses the flux of Flux No. 8 in Table 2. In the weld test piece of No. 41, the S amount in the flux was too much, and therefore the test piece was poor in hot cracking resistance.

The weld test piece of No. 42 uses the flux of Flux No. 9 in Table 2. In the weld test piece of No. 42, the total amount of Ca, Si and Al in the flux was too small, and therefore the test piece had many pock marks and was poor in welding workability.

The weld test piece of No. 43 uses the flux of Flux No. 1 0 in Table 2. In the weld test piece of No. 43, the total amount of Ca, Si and Al in the flux was too much, and therefore the test piece much scorched and was poor in slag peelability. Consequently, the weld test piece of No. 43 was poor in welding workability.

[Second Example]

A wire having the chemical components shown in Table 5 and the flux having the chemical components shown in Table 6 were produced.

The weld wire was, after melted in a high-frequency melting furnace, extruded, annealed and drawn to be 3.2 mm$\phi$. Wire No. 38 to No. 52 are examples of the invention and Wire No. 53 to No. 66 are comparative examples.

For the flux, prescribed raw materials (fluoride, metal carbonate-containing ore powder, molten flux) were mixed and stirred, then granulated using water glass, and sintered at 500°C for about 1 hour. Flux No. 11 to No. 13 are examples of the invention.

Table 5

| Wire No. | Chemical Components (mass%), remainder: Fe and unavoidable impurities | | | | | | | | | | | | | | | | | | | Relational Formula (8)*1 |
|---|---|---|---|---|---|---|---|---|---|---|---|---|---|---|---|---|---|---|---|---|
| | C | Si | Mn | Ni | Mn+Ni | S | Mn/S | P | Cu | Cr | Mo | V | Al | B | Nb | Co*² | N | O | C+N | |
| 38 | 0.07 | 0.20 | 0.82 | 0.25 | 1.07 | 0.004 | 205 | 0.004 | 0.04 | 8.30 | 0.98 | 0.21 | 0.01 | 0.0002 | 0.07 | 0.01 | 0.06 | 0.001 | 0.13 | 13.5 |
| 39 | 0.04 | 0.14 | 0.70 | 0.55 | 1.25 | 0.003 | 233 | 0.002 | 0.03 | 9.25 | 0.90 | 0.24 | 0.01 | 0.0003 | 0.06 | 0.01 | 0.08 | 0.003 | 0.12 | 10.6 |
| 40 | 0.06 | 0.25 | 1.34 | 0.20 | 1.54 | 0.008 | 168 | 0.004 | 0.07 | 8.21 | 0.88 | 0.28 | 0.02 | 0.0001 | 0.04 | 0.01 | 0.07 | 0.002 | 0.13 | 7.1 |
| 41 | 0.06 | 0.14 | 0.28 | 0.55 | 0.83 | 0.003 | 93 | 0.005 | 0.05 | 8.90 | 1.05 | 0.18 | 0.01 | 0.0002 | 0.07 | 0.01 | 0.06 | 0.002 | 0.12 | 15.7 |
| 42 | 0.06 | 0.12 | 0.85 | 0.40 | 1.25 | 0.003 | 283 | 0.004 | 0.06 | 9.08 | 0.98 | 0.22 | 0.01 | 0.0002 | 0.08 | 0.01 | 0.05 | 0.004 | 0.11 | 10.9 |
| 43 | 0.05 | 0.14 | 0.80 | 0.45 | 1.25 | 0.004 | 200 | 0.003 | 0.07 | 9.30 | 0.94 | 0.28 | 0.01 | 0.0003 | 0.03 | 0.01 | 0.06 | 0.003 | 0.11 | 6.4 |
| 44 | 0.05 | 0.20 | 1.15 | 0.15 | 1.30 | 0.003 | 383 | 0.004 | 0.08 | 8.45 | 1.15 | 0.25 | 0.01 | 0.0002 | 0.03 | 0.01 | 0.08 | 0.004 | 0.13 | 7.1 |
| 45 | 0.07 | 0.22 | 0.84 | 0.38 | 1.22 | 0.005 | 168 | 0.003 | 0.04 | 8.35 | 0.96 | 0.22 | 0.01 | 0.0001 | 0.06 | 0.01 | 0.03 | 0.003 | 0.10 | 7.6 |
| 46 | 0.06 | 0.23 | 0.55 | 0.59 | 1.14 | 0.004 | 138 | 0.004 | 0.05 | 8.22 | 0.92 | 0.21 | 0.02 | 0.0001 | 0.05 | 0.01 | 0.06 | 0.003 | 0.12 | 9.1 |
| 47 | 0.06 | 0.25 | 1.31 | 0.35 | 1.66 | 0.005 | 262 | 0.006 | 0.05 | 10.37 | 0.86 | 0.17 | 0.01 | 0.0004 | 0.04 | 0.01 | 0.07 | 0.002 | 0.13 | 5.6 |
| 48 | 0.06 | 0.09 | 0.63 | 0.12 | 0.75 | 0.005 | 126 | 0.008 | 0.04 | 8.41 | 0.97 | 0.18 | 0.01 | 0.0002 | 0.06 | 0.01 | 0.07 | 0.002 | 0.13 | 16.9 |
| 49 | 0.07 | 0.32 | 0.75 | 0.54 | 1.29 | 0.004 | 188 | 0.004 | 0.05 | 8.65 | 1.02 | 0.22 | 0.01 | 0.0003 | 0.07 | 0.01 | 0.07 | 0.001 | 0.14 | 12.3 |
| 50 | 0.05 | 0.23 | 0.84 | 0.41 | 1.25 | 0.003 | 280 | 0.005 | 0.06 | 8.74 | 0.95 | 0.18 | 0.01 | 0.0002 | 0.06 | 0.01 | 0.05 | 0.001 | 0.10 | 7.7 |
| 51 | 0.06 | 0.47 | 0.70 | 0.51 | 1.21 | 0.003 | 233 | 0.005 | 0.06 | 8.65 | 0.95 | 0.15 | 0.01 | 0.0002 | 0.05 | 0.12 | 0.06 | 0.001 | 0.12 | 7.9 |
| 52 | 0.05 | 0.41 | 0.78 | 0.28 | 1.06 | 0.004 | 195 | 0.004 | 0.11 | 8.55 | 0.96 | 0.18 | 0.01 | 0.0003 | 0.06 | 0.88 | 0.06 | 0.002 | 0.11 | 10.2 |

*1) Relational Formula (8): ([C]w + 1.5 ×[N]w) × ([V]w + 10 ×[Nb]w - [Al]w)/( [Mn]w + [Ni]w) × 100

*2) Co: 0.01 mass% means that Co is contained as an unavoidable impurity.

Table 5 continued

| Wire No. | Chemical Components (mass%), remainder: Fe and unavoidable impurities | | | | | | | | | | | | | | | | | | | Relational Formula (8)*1 |
|---|---|---|---|---|---|---|---|---|---|---|---|---|---|---|---|---|---|---|---|---|
| | C | Si | Mn | Ni | Mn +Ni | S | Mn/S | P | Cu | Cr | Mo | V | Al | B | Nb | Co*2 | N | O | C+ N | |
| 53 | 0.14 | 0.22 | 0.82 | 0.35 | 1.17 | 0.002 | 410 | 0.002 | 0.05 | 9.73 | 0.90 | 0.23 | 0.01 | 0.0001 | 0.04 | 0.01 | 0.04 | 0.003 | 0.18 | 10.6 |
| 54 | 0.01 | 0.25 | 0.75 | 0.44 | 1.19 | 0.002 | 375 | 0.004 | 0.03 | 8.18 | 0.94 | 0.19 | 0.01 | 0.0002 | 0.05 | 0.01 | 0.08 | 0.002 | 0.09 | 7.4 |
| 55 | 0.08 | 0.27 | 1.48 | 0.19 | 1.67 | 0.004 | 370 | 0.003 | 0.04 | 8.94 | 1.05 | 0.23 | 0.02 | 0.0003 | 0.04 | 0.01 | 0.03 | 0.001 | 0.11 | 4.6 |
| 56 | 0.06 | 0.24 | 0.17 | 0.15 | 0.32 | 0.001 | 170 | 0.007 | 0.07 | 8.78 | 0.92 | 0.18 | 0.01 | 0.0001 | 0.08 | 0.01 | 0.05 | 0.002 | 0.11 | 40.9 |
| 57 | 0.05 | 0.19 | 0.74 | 0.29 | 1.03 | 0.003 | 247 | 0.006 | 0.05 | 9.22 | 0.94 | 0.21 | 0.01 | 0.0002 | 0.10 | 0.01 | 0.08 | 0.002 | 0.13 | 19.8 |
| 58 | 0.08 | 0.30 | 0.83 | 0.33 | 1.16 | 0.004 | 208 | 0.005 | 0.02 | 8.59 | 1.06 | 0.23 | 0.01 | 0.0002 | 0.01 | 0.01 | 0.04 | 0.003 | 0.12 | 3.9 |
| 59 | 0.04 | 0.32 | 0.71 | 0.15 | 0.86 | 0.005 | 142 | 0.003 | 0.04 | 8.19 | 0.92 | 0.18 | 0.01 | 0.0001 | 0.04 | 0.01 | 0.10 | 0.003 | 0.14 | 12.6 |
| 60 | 0.07 | 0.09 | 0.55 | 0.45 | 1.00 | 0.002 | 275 | 0.005 | 0.01 | 8.69 | 0.95 | 0.22 | 0.02 | 0.0001 | 0.03 | 0.01 | 0.02 | 0.001 | 0.09 | 5.0 |
| 61 | 0.05 | 0.35 | 0.68 | 0.75 | 1.43 | 0.007 | 97 | 0.006 | 0.01 | 9.11 | 0.97 | 0.21 | 0.01 | 0.0003 | 0.06 | 0.01 | 0.05 | 0.001 | 0.10 | 7.0 |
| 62 | 0.08 | 0.16 | 1.25 | 0.60 | 1.85 | 0.006 | 208 | 0.001 | 0.05 | 8.90 | 0.88 | 0.17 | 0.02 | 0.0004 | 0.03 | 0.01 | 0.05 | 0.003 | 0.13 | 3.8 |
| 63 | 0.07 | 0.11 | 0.40 | 0.05 | 0.45 | 0.002 | 200 | 0.003 | 0.04 | 8.65 | 0.92 | 0.19 | 0.01 | 0.0002 | 0.06 | 0.01 | 0.06 | 0.002 | 0.13 | 27.7 |
| 64 | 0.08 | 0.24 | 0.65 | 0.23 | 0.88 | 0.003 | 217 | 0.002 | 0.03 | 8.77 | 1.09 | 0.16 | 0.01 | 0.0002 | 0.04 | 0.01 | 0.08 | 0.001 | 0.16 | 12.5 |
| 65 | 0.04 | 0.25 | 1.20 | 0.35 | 1.55 | 0.004 | 300 | 0.004 | 0.03 | 8.65 | 0.88 | 0.21 | 0.02 | 0.0003 | 0.05 | 0.01 | 0.04 | 0.001 | 0.08 | 4.5 |
| 66 | 0.08 | 0.34 | 0.54 | 0.49 | 1.03 | 0.008 | 68 | 0.005 | 0.02 | 8.96 | 0.97 | 0.26 | 0.01 | 0.0005 | 0.07 | 0.01 | 0.07 | 0.001 | 0.15 | 17.1 |

*1) Relational Formula (8): ([C]w + 1.5 ×[N]w) × ([V]w + 10 ×[Nb]w - [Al]w)/( [Mn]w + [Ni]w) × 100

*2) Co: 0.01 mass% means that Co is contained as an unavoidable impurity.

EP 3 345 716 B1

Table 6

| Flux No. | Chemical Components (mass%) | | | | | | | | | | | | | | |
|---|---|---|---|---|---|---|---|---|---|---|---|---|---|---|---|
| | Metal Fluoride | Metal Carbonate | $SiO_2$ | MgO | $Al_2O_3$ | $Z_1O_2$ | $TiO_2$ | Total*1 | Mn | Ni | S | Ca | Si | Al | Total*2 |
| 11 | 9.5 | 6.5 | 12.5 | 20.4 | 21.1 | 1.8 | 0.1 | 43.4 | 0.7 | 0.00 | 0.004 | 0.4 | 0.8 | 0.1 | 1.3 |
| 12 | 6.5 | 8.9 | 15.9 | 18.6 | 23.7 | 2.1 | - | 44.4 | 0.0 | 0.09 | 0.003 | 1.0 | 0.7 | - | 1.7 |
| 13 | 8.9 | 4.2 | 10.9 | 29.1 | 20.1 | 2.6 | - | 51.8 | 1.9 | 0.00 | 0.005 | 0.4 | 0.4 | - | 0.8 |

*1) total of MgO, $Al_2O_3$, $ZrO_2$
*2) total of Ca, Si, Al

The wire of No. 38 to No. 66 shown in Table 5 and the flux of No. 11 to No. 13 shown in Table 6 were combined as shown in Table 8, and welded. Table 7 shows the submerged arc welding condition. As the welding power source, the same one as in [First Example] was used. The shape of a groove of the test plate used in the weld test is also the same one as in [First Example] (see FIG. 1). The welding mode was 1-layer 2-pass lamination from the initial layer, and as a confirmation test for the welding workability, the appearance of beads and the slag peelability in the final layer were evaluated.

Table 7

| Wire Diameter | Polarity | Welding Current | Arc Voltage | Welding Speed | Welding Heat Input | Mode of Lamination | Wire Supply Speed |
|---|---|---|---|---|---|---|---|
| 4.0 mm | AC-AC tandem | L 400 A<br>T 390 A | L30V<br>T 31 V | 55 cpm | 20 kJ/cm | 7-layer 14-pass | 160 to 180 g/min |
| | | | | | | | |
| Flux Drying Condition | Flux Spray Height | Torch Angle | Chip/Base Metal Distance | Preheating/Interpass Temperature | | | |
| 250°C × 1 hr | 25 mm | L -5°<br>T40° | T 30 mm | 200 to 250°C | | | |

After formed, the weld test piece were subjected to PWHT at 750°C × 8 hrs in one group and to PWHT at 750°C × 32 hrs in another group, and thus two groups were prepared. The impact performance of the weld metal part of the weld test piece was evaluated for the former group of PWHT at 750°C × 8 hrs. The creep performance of the weld test piece was evaluated for the latter group of PWHT at 750°C × 32 hrs. The test piece was taken from the deposition center (weld metal center) and the plate center.

The welding workability and the hot cracking resistance were evaluated in the same manner as in [First Example].

The toughness and the creep performance were evaluated as follows.

(Toughness)

Entire weld metal was tested in a Charpy impact test in accordance with JIS Z 2242:2005 for evaluating the toughness thereof.

For evaluating the toughness of entire weld metal, a Charpy impact test piece having a 10-mm angle 2-mm V-notch (side notch) in accordance with AWS B4.0 in the normal direction (joint direction) to the weld line from the center of the thickness of the weld metal was prepared. The test temperature was 0°C, and three test pieces were tested in one test, and the data thereof were averaged to give an average value. Like in [First Example], a Charpy impact test piece and a creep test piece were taken (see FIG. 3).

Regarding the toughness of entire weld metal, the samples having a 3-point average of 50 J or more of the absorption energy (vE + 0°C) in the Charpy impact test at 0°C were evaluated as "A", those having 38 J or more and less than 50 J were evaluated as "B", and those having less than 38 J were evaluated as "C". A and B are acceptable, and C is rejected.

(Creep Performance)

Entire weld metal was tested in a creep test in accordance with JIS Z 2271:2010 for evaluating the creep performance thereof.

For evaluating the creep performance of entire weld metal, a creep test piece (test piece diameter: φ6.0 mm, length of parallel parts: 30.0 mm) in the weld line direction from the center of the thickness of the weld metal was prepared. The shape of the creep test piece was the same as in [First Example] (see FIG. 4A and FIG. 4B).

In the creep test, the test temperature was 575°C and the initial load stress was 170 MPa. The samples having a creep rupture time (Tr) of 500 hours or more were evaluated as "A", those having 200 hours or more and less than 500 hours were as "B", and those having less than 200 hours were as "C". A and B are acceptable, and C is rejected.

Table 8 shows combinations of a wire and a flux used for welding, and the evaluation results of welding workability, hot cracking resistance, toughness and creep performance.

Here, the samples having an evaluation result of "A" for the welding workability and the hot cracking resistance and having an evaluation result of "A" for the toughness and the creep performance were evaluated to have a comprehensive evaluation of "A".

The samples having an evaluation result of "A" for the welding workability and the hot cracking resistance and having an evaluation result of "B" for the toughness and the creep performance were evaluated to have a comprehensive evaluation of "B".

The samples having an evaluation result of "rejection" for at least one of the welding workability, the hot cracking resistance, the toughness and the creep performance were evaluated to have a comprehensive evaluation of "C".

Table 8

| Weld Test Piece No. | Wire No. | Flux No. | Relational Formula (9)*1 | Relational Formula (10)*2 | Relational Formula (11)*3 | Relational Formula (12)*4 | Relational Formula (13)*5 | Welding Workability | Hot Cracking Resistance | Toughness | | Creep Performance | | Comprehensive Evaluation |
|---|---|---|---|---|---|---|---|---|---|---|---|---|---|---|
| | | | | | | | | | | vE+0°C [J] | Result | Tr [hrs] | Result | |
| 44 | 38 | 12 | 0.82 | 0.25 | 1.07 | 13.5 | 13.3 | A | A | 62 | A | 1110 | A | A |
| 45 | 39 | 13 | 0.70 | 0.55 | 1.25 | 10.6 | 10.5 | A | A | 89 | A | 535 | A | A |
| 46 | 40 | 11 | 1.34 | 0.20 | 1.54 | 7.1 | 7.0 | A | A | 115 | A | 334 | B | B |
| 47 | 41 | 12 | 0.28 | 0.55 | 0.83 | 15.7 | 15.5 | A | A | 43 | B | 975 | A | B |
| 48 | 42 | 12 | 0.85 | 0.40 | 1.25 | 10.9 | 10.8 | A | A | 69 | A | 673 | A | A |
| 49 | 43 | 11 | 0.80 | 0.45 | 1.25 | 6.4 | 6.3 | A | A | 101 | A | 543 | A | A |
| 50 | 44 | 11 | 1.15 | 0.15 | 1.30 | 7.1 | 7.0 | A | A | 65 | A | 488 | B | B |
| 51 | 45 | 12 | 0.84 | 0.38 | 1.22 | 7.6 | 7.6 | A | A | 71 | A | 755 | A | A |
| 52 | 46 | 13 | 0.55 | 0.59 | 1.14 | 9.1 | 9.0 | A | A | 84 | A | 615 | A | A |
| 53 | 47 | 13 | 1.31 | 0.35 | 1.66 | 5.6 | 5.5 | A | A | 131 | A | 328 | B | B |
| 54 | 48 | 11 | 0.63 | 0.12 | 0.75 | 16.9 | 16.7 | A | A | 59 | A | 874 | A | A |
| 55 | 49 | 12 | 0.75 | 0.54 | 1.29 | 12.3 | 12.3 | A | A | 77 | A | 664 | A | A |
| 56 | 50 | 13 | 0.84 | 0.41 | 1.25 | 7.7 | 7.6 | A | A | 84 | A | 466 | B | B |
| 57 | 51 | 11 | 0.70 | 0.51 | 1.21 | 7.9 | 7.2 | A | A | 67 | A | 731 | A | A |
| 58 | 52 | 11 | 0.78 | 0.28 | 1.06 | 10.2 | 5.6 | A | A | 52 | A | 778 | A | A |
| 59 | 53 | 12 | 0.82 | 0.35 | 1.17 | 10.6 | 10.5 | A | B | 27 | B | 1085 | A | C |
| 60 | 54 | 12 | 0.75 | 0.44 | 1.19 | 7.4 | 7.4 | A | A | 141 | A | 220 | C | C |
| 61 | 55 | 11 | 1.48 | 0.19 | 1.67 | 4.6 | 4.5 | A | A | 92 | A | 151 | C | C |
| 62 | 56 | 11 | 0.17 | 0.15 | 0.32 | 40.9 | 39.7 | A | A | 18 | C | 181 | C | C |
| 63 | 57 | 11 | 0.74 | 0.29 | 1.03 | 19.8 | 19.6 | B | A | 23 | C | 1741 | A | C |
| 64 | 58 | 11 | 0.83 | 0.33 | 1.16 | 3.9 | 3.8 | A | A | 79 | A | 94 | C | C |
| 65 | 59 | 13 | 0.71 | 0.15 | 0.86 | 12.6 | 12.4 | B | A | 37 | C | 821 | A | C |
| 66 | 60 | 13 | 0.55 | 0.45 | 1.00 | 5.0 | 5.0 | A | A | 56 | A | 207 | C | C |

EP 3 345 716 B1

(continued)

| Weld Test Piece No. | Wire No. | Flux No. | Relational Formula (9)*1 | Relational Formula (10)*2 | Relational Formula (11)*3 | Relational Formula (12)*4 | Relational Formula (13)*5 | Welding Workability | Hot Cracking Resistance | Toughness | | Creep Performance | | Comprehensive Evaluation |
|---|---|---|---|---|---|---|---|---|---|---|---|---|---|---|
| | | | | | | | | | | vE+0°C [J] | Result | Tr [hrs] | Result | |
| 67 | 61 | 12 | 0.68 | 0.75 | 1.43 | 7.0 | 6.9 | A | B | 82 | A | 415 | B | C |
| 68 | 62 | 11 | 1.25 | 0.60 | 1.85 | 3.8 | 3.8 | A | A | 139 | A | 119 | C | C |
| 69 | 63 | 11 | 0.40 | 0.05 | 0.45 | 27.7 | 27.1 | A | A | 31 | C | 1258 | A | C |
| 70 | 64 | 12 | 0.65 | 0.23 | 0.88 | 12.5 | 12.4 | A | B | 47 | B | 1445 | A | C |
| 71 | 65 | 12 | 1.20 | 0.35 | 1.55 | 4.5 | 4.4 | A | A | 117 | A | 227 | C | C |
| 72 | 66 | 13 | 0.54 | 0.49 | 1.03 | 17.1 | 16.9 | A | B | 85 | A | 885 | A | C |

*1 to 5) Values calculated in accordance with the relational formulae (9) to (13).
Relational formula (9): $[Mn]_W + 0.1 \times [Mn]_F$
Relational formula (10): $[Ni]_W + [Ni]_F$
Relational formula (11): $[Mn]_W + 0.1 \times [Mn]_F + [Ni]_W + [Ni]_F$
Relational formula (12): $([C]_W + 1.5 \times [N]_W) \times ([V]_W + 10 \times [Nb]_W - [Al]_W)/([Mn]_W + 0.1 \times [Mn]_F + [Ni]_W + [Ni]_F) \times 100$
Relational formula (13): $([C]_W + 1.5 \times [N]_W) \times ([V]_W + 10 \times [Nb]_W - [Al]_W)/([Mn]_W + 0.1 \times [Mn]_F + [Ni]_W + [Ni]_F + [Co]_W) \times 100$

EP 3 345 716 B1

The weld test pieces of No. 44 to No. 58 in Table 8 satisfied the requirements in the present invention and were excellent in welding workability, hot cracking resistance and toughness and also in creep performance after long-term PWHT (Examples). In particular, the weld test pieces of No. 44, No. 45, No. 47 to No. 49, No. 51, No. 52, No. 54, No. 55, No. 57 and No. 58 were excellent in the evaluation result for creep performance after long-term PWHT.

On the other hand, the weld test pieces of No. 59 to No. 72 did not satisfy the requirements in the present invention and were therefore poor in any of the evaluation results of welding workability, hot cracking resistance, toughness and creep performance (Comparative Examples). The comprehensive evaluation of these was "C".

Specifically, the weld test piece of No. 59 uses the wire of Wire No. 53 in Table 5. In the weld test piece of No. 59, the C amount in the wire was too much, and therefore the test piece was poor in hot cracking resistance. In addition, in the weld test piece of No. 59, the total amount (C + N amounts) of the C amount and the N amount, the C and N being contained in the wire, was too much, and additionally owing to this, the test piece was poor in hot cracking resistance.

The weld test piece of No. 60 uses the wire of Wire No. 54 in Table 5. In the weld test piece of No. 60, the C amount in the wire was too small, and therefore the test piece was poor in creep performance.

The weld test piece of No. 61 uses the wire of Wire No. 55 in Table 5. In the weld test piece of No. 61, the Mn amount in the wire was too much, and therefore the test piece was poor in creep performance. In addition, the weld test piece of No. 61 did not satisfy the relational formula (8), and additionally owing to this, the test piece was poor in creep performance.

The weld test piece of No. 62 uses the wire of Wire No. 56 in Table 5. In the weld test piece of No. 62, the Mn amount in the wire was too small and the total amount (Mn + Ni amounts) of the Mn amount and the Ni amount, the Mn and Ni being contained in the wire, was too small, and therefore the test piece was poor in toughness. In addition, the weld test piece of No. 62 was poor in creep performance.

The weld test piece of No. 63 uses the wire of Wire No. 57 in Table 5. In the weld test piece of No. 63, the Nb amount in the wire was too much, and therefore the test piece was poor in toughness. In addition, the weld test piece of No. 63 was much scorched and was poor in slag peelability. Consequently, the weld test piece of No. 63 was poor in welding workability.

The weld test piece of No. 64 uses the wire of Wire No. 58 in Table 5. In the weld test piece of No. 64, the Nb amount in the wire was too small, and therefore the test piece was poor in creep performance. In addition, the weld test piece of No. 64 did not satisfy the relational formula (8), and additionally owing to this, the test piece was poor in creep performance.

The weld test piece of No. 65 uses the wire of Wire No. 59 in Table 5. In the weld test piece of No. 65, the N amount in the wire was too much, and therefore the test piece was poor in toughness. In addition, the weld test piece of No. 65 was poor in welding workability.

The weld test piece of No. 66 uses the wire of Wire No. 60 in Table 5. In the weld test piece of No. 66, the N amount in the wire was too small, and therefore the test piece was poor in creep performance.

The weld test piece of No. 67 uses the wire of Wire No. 61 in Table 5. In the weld test piece of No. 67, the Ni amount in the flux was too much, and therefore the test piece was poor in hot cracking resistance.

The weld test piece of No. 68 uses the wire of Wire No. 62 in Table 5. In the weld test piece of No. 68, the Mn + Ni amount in the wire was too much, and therefore the test piece was poor in creep performance. In addition, the weld test piece of No. 68 did not satisfy the relational formula (8), and additionally owing to this, the test piece was poor in creep performance.

The weld test piece of No. 69 uses the wire of Wire No. 63 in Table 5. In the weld test piece of No. 69, the Mn + Ni amount in the wire was too small, and therefore the test piece was poor in toughness.

The weld test piece of No. 70 uses the wire of Wire No. 64 in Table 5. In the weld test piece of No. 70, the total amount (C + N amounts) of the C amount and the N amount, the C and N being contained in the wire, was too much, and therefore the test piece was poor in hot cracking resistance.

The weld test piece of No. 71 uses the wire of Wire No. 65 in Table 5. In the weld test piece of No. 71, the C + N amount that the wire contained was too small, and therefore the test piece was poor in creep performance. In addition, the weld test piece of No. 71 did not satisfy the relational formula (8), and additionally owing to this, the test piece was poor in creep performance.

The weld test piece of No. 72 uses the wire of Wire No. 66 in Table 5. In the weld test piece of No. 72, Mn/S in the wire was too low, and therefore the test piece was poor in hot cracking resistance.

[Third Example: influence of components of impurities]

Using the components of Wire No. 1 in Table 1 and those of Flux No. 3 in Table 2 as base components, wires and fluxes were produced in which the amount of the impurities was varied. Wire No. 1-2 and Wire No. 1-3 shown in Table 9, and Flux No. 3-2 and Flux No. 3-3 shown in Table 10 are component formulations containing intentionally increased impurities. Wire No. 1-1 in Table 9 shows the components of the impurities in Wire No. 1, and Flux No. 3-1 in Table 10 shows the components of the impurities in Flux No. 1. X in Table 9 and Y in Table 10 are values calculated in accordance with the relational formulae (5) and (6) mentioned below, respectively.

The wire of No. 1-1 to No. 1-3 in Table 9 and the flux of No. 3-1 to No. 3-3 in Table 10 were combined as in Table 11, welded, and subjected to PWHT to give weld test pieces of No. 73 to No. 75 in Table 11. Welding and PWHT were carried out in the same manner as in [First Example].

Table 9

| Wire No. | Chemical Components (mass%) | | | | | | | | | | | | | | | | | |
|---|---|---|---|---|---|---|---|---|---|---|---|---|---|---|---|---|---|---|
| | C | Si | Mn | Ni | Mn+Ni | S | Mn/S | P | Cu | Cr | Mo | V | Al | B | Nb | Co | N | O |
| 1 | 0.10 | 0.31 | 0.53 | 0.14 | 0.67 | 0.005 | 106 | 0.002 | 0.05 | 8.80 | 1.03 | 0.21 | 0.01 | 0.0001 | 0.05 | 0.30 | 0.05 | 0.003 |

| Wire No. | Chemical Components (mass ppm) | | | | | | |
|---|---|---|---|---|---|---|---|
| | Pb | Bi | P | Sn | As | Sb | X* |
| 1-1 | 0.7 | 0.3 | 22 | 34 | 11 | 19 | 462 |
| 1-2 | 1.5 | 1.0 | 33 | 24 | 16 | 29 | 587 |
| 1-3 | 0.7 | 0.5 | 95 | 51 | 22 | 49 | 1421 |

*) X is a value calculated in accordance with the relational formula (5) where $[P]_W$ is the P amount (mass ppm) of the wire components, $[Sn]_W$ is the Sn amount (mass ppm) of the wire components, $[As]_W$ is the As amount (mass ppm) of the wire components, and $[Sb]_W$ is the Sb amount (mass ppm) of the wire components:
Relational formula (5): $X = 10 \times [P]_W + 4 \times [Sn]_W + [As]_W + 5 \times [Sb]_W$.

Table 10

| Flux No. | Chemical Components (mass%) | | | | | | | | | | | | |
|---|---|---|---|---|---|---|---|---|---|---|---|---|---|
| | Metal Fluoride | Metal Carbonate | SiO$_2$ | MgO | Al$_2$O$_3$ | ZrO$_2$ | TiO$_2$ | Mn | Ni | S | Ca | Si | Al |
| 3 | 8.9 | 4.2 | 10.9 | 29.1 | 20.1 | 2.6 | - | 1.9 | 0.00 | 0.007 | 0.4 | 0.4 | 0 |

| Flux No. | Chemical Components (mass ppm) | | | | | | |
|---|---|---|---|---|---|---|---|
| | Pb | Bi | P | Sn | As | Sb | Y* |
| 3-1 | 0.4 | 0.1 | 82 | 9 | 30 | 24 | 1006 |
| 3-2 | 0.8 | 0.5 | 105 | 25 | 41 | 9 | 1236 |
| 3-3 | 0.6 | 0.2 | 114 | 42 | 55 | 45 | 1588 |

*) Y is a value calculated in accordance with the relational formula (6) where $[P]_F$ is the P amount (mass ppm) of the flux components, $[Sn]_F$ is the Sn amount (mass ppm) of the flux components, $[As]_F$ is the As amount (mass ppm) of the flux components, and $[Sb]_F$ is the Sb amount (mass ppm) of the flux components:

Relational formula (6): $Y = 10 \times [P]_F + 4 \times [Sn]_F + [As]_F + 5 \times [Sb]_F$.

According to the same method described in [First Example], the toughness was evaluated. The results are shown in Table 11.

Table 11

| Weld Test Piece No. | Wire No. | Flux No. | Relational Formula (4)*1 | Relational Formula (7)*2 | Toughness | |
|---|---|---|---|---|---|---|
| | | | | | vE+20°C | Result |
| 73 | 1-1 | 3-1 | 1.1 | 663 | 70 | A |
| 74 | 1-2 | 3-2 | 2.8 | 834 | 34 | C |
| 75 | 1-3 | 3-3 | 1.4 | 1739 | 39 | C |

*1) The relational formula (4) indicates a value calculated in accordance with the following formula where $[Pb]_w$ is the Pb amount (mass ppm) of the wire components and $[Bi]_w$ is the Bi amount (mass ppm) of the wire components, and $[Pb]_F$ is the Pb amount (mass ppm) of the flux components and $[Bi]_F$ is the Bi amount (mass ppm) of the flux components: .
Relational formula (4): $[Pb]_w + [Bi]_w + 0.2 \times [Pb]_F + 0.2 \times [Bi]_F$
*2) The relational formula (7) indicates a value calculated as follows, using X obtained in the relational formula (5) and Y obtained in the relational formula (6).
Relational formula (7): $X + 0.2 \times Y$

As shown in Table 11, the weld test piece of No. 73 satisfied the following relational formula (4) where $[Pb]_w$ is the Pb amount (ppm) of the wire components and $[Bi]_w$ is the Bi amount (ppm) of the wire components, and $[Pb]_F$ is the Pb amount (ppm) of the flux components and $[Bi]_F$ is the Bi amount (ppm) of the flux components.

$$[Pb]_W + [Bi]_W + 0.2 \times [Pb]_F + 0.2 \times [Bi]_F \leq 2.0 \text{ ppm} \quad (4)$$

The weld test piece of No. 73 satisfied the following relational formulae (5) to (7) where $[P]_w$ is the P amount (ppm) of the wire components, $[Sn]_w$ is the Sn amount (ppm) of the wire components, $[As]_w$ is the As amount (ppm) of the wire components and $[Sb]_w$ is the Sb amount (ppm) of the wire components, and $[P]_F$ is the P amount (ppm) of the flux components, $[Sn]_F$ is the Sn amount (ppm) of the flux components, $[As]_F$ is the As amount (ppm) of the flux components and $[Sb]_F$ is the Sb amount (ppm) of the flux components. Consequently, the weld test piece of No. 73 was excellent in toughness.

$$X = 10 \times [P]_W + 4 \times [Sn]_W + [As]_W + 5 \times [Sb]_W \quad (5)$$

$$Y = 10 \times [P]_F + 4 \times [Sn]_F + [As]_F + 5 \times [Sb]_F \quad (6)$$

$$X + 0.2 \times Y \leq 1500 \text{ ppm} \quad (7)$$

On the other hand, the weld test piece of No. 74 did not satisfy the relational formula (4). Consequently, the weld test piece of No. 74 was poor in toughness.
The weld test piece of No. 75 did not satisfy the relational formula (7). Consequently, the weld test piece of No. 75 was poor in toughness.

Industrial Applicability

The wire for submerged arc welding of the present invention is useful for welding for thermal power boilers and turbines, and chemical reactors for desulfurization or reforming (oil refining), etc.

**Claims**

1. A wire for submerged arc welding for use in combination with a flux,

(1) the wire comprising, relative to a total mass of the wire and in mass%:

C: 0.03 to 0.13%;
Si: 0.05 to 0.50%;
Mn: 0.20 to 1.40%;
Cr: 8.00 to 10.50%;
Mo: 0.85 to 1.20%;
V: 0.15 to 0.30%;
Nb: 0.02 to 0.09%; and
N: 0.03 to 0.09%,

wherein:

Ni: 0.70% or less;
P: 0.010% or less;
S: 0.010% or less;
Cu: 0.30% or less;
Al: 0.04% or less;
B: 0.0015% or less;
O: 0.030% or less;
a total amount of the contained Mn amount and the contained Ni amount: 0.50 to 1.75%,
a ratio Mn/S of the contained Mn amount to the contained S amount: 87 or more, and
the remainder is Fe and unavoidable impurities, wherein:
the flux comprises, relative to a total mass of the flux and in mass%:
a metal fluoride in terms of F: 1.5 to 11%;
a metal carbonate in terms of $CO_2$: 3 to 15%;
one or two or more of MgO, $Al_2O_3$, $ZrO_2$ and $TiO_2$ in total: 10 to 60%;
$SiO_2$: 5 to 20%;
Mn: 2.5% or less;
Ni: 0.10% or less;
S: 0.010% or less;
one or two or more of Ca, Si and Al in total: 0.5 to 2.5%, and
the followings are satisfied:

$$0.55\% \leq [\text{Mn}]_W + 0.1 \times [\text{Mn}]_F \leq 1.00\%,$$

$$[\text{Ni}]_W + [\text{Ni}]_F \leq 0.50\%,$$

$$0.60\% \leq [\text{Mn}]_W + 0.1 \times [\text{Mn}]_F + [\text{Ni}]_W + [\text{Ni}]_F \leq 1.15\%,$$

wherein $[\text{Mn}]_W$ is the Mn amount (%) of the wire components, $[\text{Ni}]_W$ is the Ni amount (%) of the wire components, $[\text{Mn}]_F$ is the Mn amount (%) of the flux components, and $[\text{Ni}]_F$ is the Ni amount (%) of the flux components.

or
(2) the wire comprising, relative to a total mass of the wire and in mass%:

C: 0.07 to 0.13%;
Si: 0.05 to 0.50%;
Mn: 0.20 to 1.00%;
Cr: 8.00 to 10.50%;
Mo: 0.85 to 1.20%;
V: 0.15 to 0.30%;
Nb: 0.02 to 0.08%;

Co: 0.05 to 0.80%; and
N: 0.03 to 0.07%,

wherein:

Ni: 0.50% or less;
P: 0.010% or less;
S: 0.002 to 0.010%;
Cu: 0.30% or less;
Al: 0.04% or less;
B: 0.0015% or less;
O: 0.030% or less;
a total amount of the contained Mn amount and the contained Ni amount: 0.50 to 1.15%,
a ratio Mn/S of the contained Mn amount to the contained S amount contained: 87 or more, and
the remainder is Fe and unavoidable impurities,

wherein:
the flux comprises, relative to a total mass of the flux and in mass%:

a metal fluoride in terms of F: 1.5 to 11%;
a metal carbonate in terms of $CO_2$: 3 to 15%;
one or two or more of MgO, $Al_2O_3$, $ZrO_2$ and $TiO_2$ in total: 10 to 60%;
$SiO_2$: 5 to 20%;
Mn: 2.5% or less;
Ni: 0.10% or less;
S: 0.010% or less;
one or two or more of Ca, Si and Al in total: 0.5 to 2.5%, and
the followings are satisfied:

$$0.55\% \leq [Mn]_W + 0.1 \times [Mn]_F \leq 1.00\%,$$

$$[Ni]_W + [Ni]_F \leq 0.50\%,$$

$$0.60\% \leq [Mn]_W + 0.1 \times [Mn]_F + [Ni]_W + [Ni]_F \leq 1.15\%,$$

wherein $[Mn]_W$ is the Mn amount (%) of the wire components, $[Ni]_W$ is the Ni amount (%) of the wire components, $[Mn]_F$ is the Mn amount (%) of the flux components, and $[Ni]_F$ is the Ni amount (%) of the flux components.

or
(3) the wire comprising, relative to a total mass of the wire and in mass%:

C: 0.03 to 0.08%;
Si: 0.05 to 0.50%;
Mn: 0.20 to 1.40%;
Cr: 8.00 to 10.50%;
Mo: 0.85 to 1.20%;
V: 0.15 to 0.30%;
Nb: 0.02 to 0.09%;
N: 0.03 to 0.09%;

wherein

Ni: 0.70% or less,

P: 0.010% or less,
S: 0.010% or less,
Cu: 0.30% or less,
Al: 0.04% or less,
B: 0.0015% or less,
O: 0.030% or less,
a total amount of the contained Mn amount and the contained Ni amount: 0.60 to 1.75%,
a ratio Mn/S of the contained Mn amount to the contained S amount: 87 or more,
a total amount of the contained C amount and the contained N amount: 0.09 to 0.15%, and optionally:

Co: 0.05 to 0.80%, and
the remainder is Fe and unavoidable impurities,

wherein the following is satisfied:

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F + [Co]_W) \times 100 \geq 5\%,$$

wherein $[Co]_W$ is the Co amount (%) of the wire components,
wherein:
the flux comprises, relative to a total mass of the flux and in mass%:

a metal fluoride in terms of F: : 1.5 to 11%;
a metal carbonate in terms of $CO_2$: 3 to 15%;
one or two or more of MgO, $Al_2O_3$, $ZrO_2$ and $TiO_2$ in total: 10 to 60%;
$SiO_2$: 5 to 20%;
Mn: 2.5% or less;
Ni: 0.10% or less;
S: 0.010% or less;
one or two or more of Ca, Si and Al in total: 0.5 to 2.5%, and
the followings are satisfied:

$$0.55\% \leq [Mn]_W + 0.1 \times [Mn]_F \leq 1.00\%,$$

$$[Ni]_W + [Ni]_F \leq 0.70\%,$$

$$0.60\% \leq [Mn]_W + 0.1 \times [Mn]_F + [Ni]_W + [Ni]_F \leq 1.45\%,$$

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F) \times 100 \geq 5\%,$$

wherein $[V]_W$ is the V amount (%) of the wire components, $[Nb]_W$ is the Nb amount (%) of the wire components, $[C]_W$ is the C amount (%) of the wire components, $[N]_W$ is the N amount (%) of the wire components, $[Ni]_W$ is the Ni amount (%) of the wire components, $[Mn]_W$ is the Mn amount (%) of the wire components, $[Al]_W$ is the Al amount (%) of the wire components, $[Mn]_F$ is the Mn amount (%) of the flux components, and $[Ni]_F$ is the Ni amount (%) of the flux components.

2. The wire for submerged arc welding according to claim 1, the wire comprising, relative to the total mass of the wire and in mass%:

C: 0.03 to 0.13%;

Si: 0.05 to 0.50%;
Mn: 0.20 to 1.40%;
Cr: 8.00 to 10.50%;
Mo: 0.85 to 1.20%;
V: 0.15 to 0.30%;
Nb: 0.02 to 0.09%; and
N: 0.03 to 0.09%,

wherein:

Ni: 0.70% or less;
P: 0.010% or less;
S: 0.010% or less;
Cu: 0.30% or less;
Al: 0.04% or less;
B: 0.0015% or less;
O: 0.030% or less;
the total amount of the contained Mn amount and the contained Ni amount: 0.50 to 1.75%,
the ratio Mn/S of the contained Mn amount to the contained S amount: 87 or more, and
the remainder is Fe and unavoidable impurities,

wherein:
the flux comprises, relative to a total mass of the flux and in mass%:

a metal fluoride in terms of F: 1.5 to 11%;
a metal carbonate in terms of $CO_2$: 3 to 15%;
one or two or more of MgO, $Al_2O_3$, $ZrO_2$ and $TiO_2$ in total: 10 to 60%;
$SiO_2$: 5 to 20%;
Mn: 2.5% or less;
Ni: 0.10% or less;
S: 0.010% or less;
one or two or more of Ca, Si and Al in total: 0.5 to 2.5%, and
the followings are satisfied:

$$0.55\% \leq [Mn]_W + 0.1 \times [Mn]_F \leq 1.00\%,$$

$$[Ni]_W + [Ni]_F \leq 0.50\%,$$

$$0.60\% \leq [Mn]_W + 0.1 \times [Mn]_F + [Ni]_W + [Ni]_F \leq 1.15\%,$$

wherein $[Mn]_W$ is the Mn amount (%) of the wire components, $[Ni]_W$ is the Ni amount (%) of the wire components, $[Mn]_F$ is the Mn amount (%) of the flux components, and $[Ni]_F$ is the Ni amount (%) of the flux components.

3. The wire for submerged arc welding according to claim 1, the wire comprising, relative to the total mass of the wire and in mass%:

C: 0.07 to 0.13%;
Si: 0.05 to 0.50%;
Mn: 0.20 to 1.00%;
Cr: 8.00 to 10.50%;
Mo: 0.85 to 1.20%;
V: 0.15 to 0.30%;
Nb: 0.02 to 0.08%;
Co: 0.05 to 0.80%; and

N: 0.03 to 0.07%,

wherein:

Ni: 0.50% or less;
P: 0.010% or less;
S: 0.002 to 0.010%;
Cu: 0.30% or less;
Al: 0.04% or less;
B: 0.0015% or less;
O: 0.030% or less;
the total amount of the contained Mn amount and the contained Ni amount: 0.50 to 1.15%,
the ratio Mn/S of the contained Mn amount to the contained S amount contained: 87 or more, and
the remainder is Fe and unavoidable impurities,
wherein:
the flux comprises, relative to a total mass of the flux and in mass%:

a metal fluoride in terms of F: 1.5 to 11%;
a metal carbonate in terms of $CO_2$: 3 to 15%;
one or two or more of MgO, $Al_2O_3$, $ZrO_2$ and $TiO_2$ in total: 10 to 60%;
$SiO_2$: 5 to 20%;
Mn: 2.5% or less;
Ni: 0.10% or less;
S: 0.010% or less;
one or two or more of Ca, Si and Al in total: 0.5 to 2.5%, and
the followings are satisfied:

$$0.55\% \leq [Mn]_W + 0.1 \times [Mn]_F \leq 1.00\%,$$

$$[Ni]_W + [Ni]_F \leq 0.50\%,$$

$$0.60\% \leq [Mn]_W + 0.1 \times [Mn]_F + [Ni]_W + [Ni]_F \leq 1.15\%,$$

wherein $[Mn]_W$ is the Mn amount (%) of the wire components, $[Ni]_W$ is the Ni amount (%) of the wire components, $[Mn]_F$ is the Mn amount (%) of the flux components, and $[Ni]_F$ is the Ni amount (%) of the flux components.

4. The wire for submerged arc welding according to claim 3, wherein
the wire and the flux comprise at least one of Pb and Bi, and
the following is satisfied:

$$[Pb]_W + [Bi]_W + 0.2 \times [Pb]_F + 0.2 \times [Bi]_F \leq 2.0 \text{ ppm},$$

wherein $[Pb]_W$ is the Pb amount in ppm of the wire components, $[Bi]_W$ is the Bi amount in ppm of the wire components, $[Pb]_F$ is the Pb amount in ppm of the flux components, and $[Bi]_F$ the Bi amount in ppm of the flux components.

5. The wire for submerged arc welding according to claim 3, wherein the wire and the flux comprise at least one of P, Sn As and Sb, and
the followings are satisfied:

$$X = 10 \times [P]_W + 4 \times [Sn]_W + [As]_W + 5 \times [Sb]_W,$$

$$Y = 10 \times [P]_F + 4 \times [Sn]_F + [As]_F + 5 \times [Sb]_F,$$

$$X + 0.2 \times Y \leq 1500 \text{ ppm},$$

wherein [P]w is the P amount in ppm of the wire components, [Sn]w is the Sn amount in ppm of the wire components, [As]w is the As amount in ppm of the wire components, [Sb]w is the Sb amount in ppm of the wire components, $[P]_F$ is the P amount in ppm of the flux components, $[Sn]_F$ is the Sn amount in ppm of the flux components, $[As]_F$ is the As amount in ppm of the flux components, and $[Sb]_F$ is the Sb amount in ppm of the flux components.

6. The wire for submerged arc welding according to claim 1, the wire comprising, relative to the total mass of the wire and in mass%:

C: 0.03 to 0.08%;
Si: 0.05 to 0.50%;
Mn: 0.20 to 1.40%;
Cr: 8.00 to 10.50%;
Mo: 0.85 to 1.20%;
V: 0.15 to 0.30%;
Nb: 0.02 to 0.09%;
N: 0.03 to 0.09%;

wherein

Ni: 0.70% or less,
P: 0.010% or less,
S: 0.010% or less,
Cu: 0.30% or less,
Al: 0.04% or less,
B: 0.0015% or less,
O: 0.030% or less,
the total amount of the contained Mn amount and the contained Ni amount: 0.60 to 1.75%,
the ratio Mn/S of the contained Mn amount to the contained S amount: 87 or more,
the total amount of the contained C amount and the contained N amount: 0.09 to 0.15%, and optionally:

Co: 0.05 to 0.80%, and
the remainder is Fe and unavoidable impurities,

wherein the following is satisfied:

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F + [Co]_W) \times 100 \geq 5\%,$$

wherein [Co]w is the Co amount (%) of the wire components,
wherein:
the flux comprises, relative to a total mass of the flux and in mass%:

a metal fluoride in terms of F: 1.5 to 11%;
a metal carbonate in terms of $CO_2$: 3 to 15%;
one or two or more of MgO, $Al_2O_3$, $ZrO_2$ and $TiO_2$ in total: 10 to 60%;
$SiO_2$: 5 to 20%;
Mn: 2.5% or less;
Ni: 0.10% or less;
S: 0.010% or less;
one or two or more of Ca, Si and Al in total: 0.5 to 2.5%, and

the followings are satisfied:

$$0.55\% \leq [Mn]_W + 0.1 \times [Mn]_F \leq 1.00\%,$$

$$[Ni]_W + [Ni]_F \leq 0.70\%,$$

$$0.60\% \leq [Mn]_W + 0.1 \times [Mn]_F + [Ni]_W + [Ni]_F \leq 1.45\%,$$

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F) \times 100 \geq 5\%,$$

wherein $[V]_W$ is the V amount (%) of the wire components, $[Nb]_W$ is the Nb amount (%) of the wire components, $[C]_W$ is the C amount (%) of the wire components, $[N]_W$ is the N amount (%) of the wire components, $[Ni]_W$ is the Ni amount (%) of the wire components, $[Mn]_W$ is the Mn amount (%) of the wire components, $[Al]_W$ is the Al amount (%) of the wire components, $[Mn]_F$ is the Mn amount (%) of the flux components, and $[Ni]_F$ is the Ni amount (%) of the flux components.

7. The wire for submerged arc welding according to claim 6, wherein the following is satisfied:

$$([C]_W + 1.5 \times [N]_W) \times ([V]_W + 10 \times [Nb]_W - [Al]_W)/( [Mn]_W + [Ni]_W) \times 100 \geq 5\%,$$

wherein $[V]_W$ is the V amount (%) of the wire components, $[Nb]_W$ is the Nb amount (%) of the wire components, $[C]_W$ is the C amount (%) of the wire components, $[N]_W$ is the N amount (%) of the wire components, $[Ni]_W$ is the Ni amount (%) of the wire components, $[Mn]_W$ is the Mn amount (%) of the wire components, and $[Al]_W$ is the Al amount (%) of the wire components.

## Patentansprüche

1. Draht zum Unterpulverlichtbogenschweißen zur Verwendung in Kombination mit einem Flußmittel,

(1) wobei der Draht umfaßt, relativ zu einer Gesamtmasse des Drahtes und in Masse-%:

C: 0,03 bis 0,13%,
Si: 0,05 bis 0,50%,
Mn: 0,20 bis 1,40%,
Cr: 8,00 bis 10,50%,
Mo: 0,85 bis 1,20%,
V: 0,15 bis 0,30%,
Nb: 0,02 bis 0,09% und
N: 0,03 bis 0,09%,

wobei:

Ni: 0,70% oder weniger,
P: 0,010% oder weniger,
S: 0,010% oder weniger,
Cu: 0,30% oder weniger,
Al: 0,04% oder weniger,
B: 0,0015% oder weniger,
O: 0,030% oder weniger,
eine Gesamtmenge der enthaltenen Mn Menge und der enthaltenen Ni Menge:

0,50 bis 1,75%,
ein Verhältnis Mn/S der enthaltenen Mn Menge zu der enthaltenen S Menge:
87 oder mehr, und
der Rest Fe und unvermeidbare Verunreinigungen sind,

wobei:
das Flußmittel umfaßt, relativ zu einer Gesamtmasse des Flußmittels und in Masse-%:

ein Metallfluorid bezogen auf F: 1,5 bis 11%,
ein Metallcarbonat bezogen auf $CO_2$: 3 bis 15%,
ein oder zwei oder mehrere von $MgO$, $Al_2O_3$, $ZrO_2$ und $TiO_2$ im Gesamten: 10 bis 60%,
$SiO_2$: 5 bis 20%,
Mn: 2,5% oder weniger
Ni: 0,10% oder weniger
S: 0,010% oder weniger;
eines oder zwei oder mehrere von Ca, Si und Al im Gesamten: 0,5 bis 2,5%, und
die Folgenden erfüllt werden:

$$0,55\% \leq [Mn]_W + 0,1 \times [Mn]_F \leq 1,00\%,$$

$$[Ni]_W + [Ni]_F \leq 0,50\%,$$

$$0,60\% \leq [Mn]_W + 0,1 \times [Mn]_F + [Ni]_W + [Ni]_F \leq 1,15\%,$$

wobei $[Mn]_W$ die Mn Menge (%) der Drahtkomponenten ist, $[Ni]_W$ die Ni Menge (%) der Drahtkomponenten ist, $[Mn]_F$ die Mn Menge (%) der Flußmittelkomponenten ist und $[Ni]_F$ die Ni Menge (%) der Flußmittelkomponenten ist,

oder
(2) der Draht umfaßt, relativ zu einer Gesamtmasse des Drahtes und in Masse-%:

C: 0,07 bis 0,13%,
Si: 0,05 bis 0,50%,
Mn: 0,20 bis 1,00%,
Cr: 8,00 bis 10,50%,
Mo: 0,85 bis 1,20%,
V: 0,15 bis 0,30%,
Nb: 0,02 bis 0,08%,
Co: 0,05 bis 0,80% und
N: 0,03 bis 0,07%,

wobei:

Ni: 0,50% oder weniger,
P: 0,010% oder weniger,
S: 0,002 bis 0,010%,
Cu: 0,30% oder weniger,
Al: 0,04% oder weniger,
B: 0,0015% oder weniger,
O: 0,030% oder weniger,
eine Gesamtmenge der enthaltenen Mn Menge und der enthaltenen Ni Menge: 0,50 bis 1,15%,
ein Verhältnis Mn/S der enthaltenen Mn Menge zu der enthaltenen S Menge: 87 oder mehr, und
der Rest Fe und unvermeidbare Verunreinigungen sind,

wobei:
das Flußmittel umfaßt, relativ zu einer Gesamtmasse des Flußmittels und in Masse-%:

ein Metallfluorid bezogen auf F: 1,5 bis 11%,
ein Metallcarbonat bezogen auf $CO_2$: 3 bis 15%,
ein oder zwei oder mehrere von MgO, $Al_2O_3$, $ZrO_2$ und $TiO_2$ im Gesamten: 10 bis 60%,
$SiO_2$: 5 bis 20%,
Mn: 2,5% oder weniger
Ni: 0,10% oder weniger
S: 0,010% oder weniger;
eines oder zwei oder mehrere von Ca, Si und Al im Gesamten: 0,5 bis 2,5%, und
die Folgenden erfüllt werden:

$$0,55\% \leq [Mn]_W + 0,1 \times [Mn]_F \leq 1,00\%,$$

$$[Ni]_W + [Ni]_F \leq 0,50\%,$$

$$0,60\% \leq [Mn]_W + 0,1 \times [Mn]_F + [Ni]_W + [Ni]_F \leq 1,15\%,$$

wobei $[Mn]_W$ die Mn Menge (%) der Drahtkomponenten ist, $[Ni]_W$ die Ni Menge (%) der Drahtkomponenten ist, $[Mn]_F$ die Mn Menge (%) der Flußmittelkomponenten ist und $[Ni]_F$ die Ni Menge (%) der Flußmittelkomponenten ist,

oder
(3) der Draht umfaßt, relativ zu einer Gesamtmasse des Drahtes und in Masse-%:

C: 0,03 bis 0,08%,
Si: 0,05 bis 0,50%,
Mn: 0,20 bis 1,40%,
Cr: 8,00 bis 10,50%,
Mo: 0,85 bis 1,20%,
V: 0,15 bis 0,30%,
Nb: 0,02 bis 0,09%,
N: 0,03 bis 0,09%,

wobei:

Ni: 0,70% oder weniger,
P: 0,010% oder weniger,
S: 0,010% oder weniger,
Cu: 0,30% oder weniger,
Al: 0,04% oder weniger,
B: 0,0015% oder weniger,
O: 0,030% oder weniger,
eine Gesamtmenge der enthaltenen Mn Menge und der enthaltenen Ni Menge: 0,60 bis 1,75%,
ein Verhältnis Mn/S der enthaltenen Mn Menge zu der enthaltenen S Menge: 87 oder mehr,
eine Gesamtmenge der enthaltenen C Menge und der enthaltenen N Menge: 0,09 bis 0,15%, und gegebenenfalls
Co: 0,05 bis 0,80 %,
wobei der Rest Fe und unvermeidbare Verunreinigungen sind,
wobei das Folgende erfüllt ist,

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F + [Co]_W) \times 100 \geq 5\%,$$

wobei $[Co]_W$ die Co Menge (%) der Drahtkomponenten ist,

wobei:
das Flußmittel umfaßt, relativ zu einer Gesamtmasse des Flußmittels und in Masse-%:

ein Metallfluorid bezogen auf F: 1,5 bis 11%,
ein Metallcarbonat bezogen auf $CO_2$: 3 bis 15%,
ein oder zwei oder mehrere von MgO, $Al_2O_3$, $ZrO_2$ und $TiO_2$ im Gesamten: 10 bis 60%,
$SiO_2$: 5 bis 20%,
Mn: 2,5% oder weniger
Ni: 0,10% oder weniger
S: 0,010% oder weniger;
eines oder zwei oder mehrere von Ca, Si und Al im Gesamten: 0,5 bis 2,5%, und
die folgenden erfüllt werden:

$$0,55\% \leq [Mn]_W + 0,1 \times [Mn]_F \leq 1,00\%,$$

$$[Ni]_W + [Ni]_F \leq 0,70\%,$$

$$0,60\% \leq [Mn]_W + 0,1 \times [Mn]_F + [Ni]_W + [Ni]_F \leq 1,45\%,$$

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F) \times 100 \geq 5\%,$$

wobei $[V]_W$ die V Menge (%) der Drahtkomponenten ist, $[Nb]_W$ die Nb Menge (%) der Drahtkomponenten ist, $[C]_W$ die C Menge (%) der Drahtkomponenten ist, $[N]_W$ die N Menge (%) der Drahtkomponenten ist, $[Ni]_W$ die Ni Menge (%) der Drahtkomponenten ist, $[Mn]_W$ die Mn Menge (%) der Drahtkomponenten ist, $[Al]_W$ die Al Menge (%) der Drahtkomponenten ist, $[Mn]_F$ die Mn Menge (%) der Flußmittelkomponenten ist und $[Ni]_F$ die Ni Menge (%) der Flußmittelkomponenten ist.

2. Draht zum Unterpulverlichtbogenschweißen gemäß Anspruch 1,
   wobei der Draht umfaßt, relativ zu einer Gesamtmasse des Drahtes und in Masse-%:

   C: 0,03 bis 0,13%,
   Si: 0,05 bis 0,50%,
   Mn: 0,20 bis 1,40%,
   Cr: 8,00 bis 10,50%,
   Mo: 0,85 bis 1,20%,
   V: 0,15 bis 0,30%,
   Nb: 0,02 bis 0,09% und
   N: 0,03 bis 0,09%,

   wobei:

   Ni: 0,70% oder weniger,
   P: 0,010% oder weniger,
   S: 0,010% oder weniger,

Cu: 0,30% oder weniger,
Al: 0,04% oder weniger,
B: 0,0015% oder weniger,
O: 0,030% oder weniger,
eine Gesamtmenge der enthaltenen Mn Menge und der enthaltenen Ni Menge: 0,50 bis 1,75%,
ein Verhältnis Mn/S der enthaltenen Mn Menge zu der enthaltenen S Menge: 87 oder mehr, und
der Rest Fe und unvermeidbare Verunreinigungen sind,

wobei:
das Flußmittel umfaßt, relativ zu einer Gesamtmasse des Flußmittels und in Masse-%:

ein Metallfluorid bezogen auf F: 1,5 bis 11%,
ein Metallcarbonat bezogen auf $CO_2$: 3 bis 15%,
ein oder zwei oder mehrere von MgO, $Al_2O_3$, $ZrO_2$ und $TiO_2$ im Gesamten: 10 bis 60%,
$SiO_2$: 5 bis 20%,
Mn: 2,5% oder weniger
Ni: 0,10% oder weniger
S: 0,010% oder weniger;
eines oder zwei oder mehrere von Ca, Si und Al im Gesamten: 0,5 bis 2,5%, und
die Folgenden erfüllt sind:

$$0,55\% \leq [Mn]_W + 0,1 \times [Mn]_F \leq 1,00\%,$$

$$[Ni]_W + [Ni]_F \leq 0,50\%,$$

$$0,60\% \leq [Mn]_W + 0,1 \times [Mn]_F + [Ni]_W + [Ni]_F \leq 1,15\%,$$

wobei $[Mn]_W$ die Mn Menge (%) der Drahtkomponenten ist, $[Ni]_W$ die Ni Menge (%) der Drahtkomponenten ist, $[Mn]_F$ die Mn Menge (%) der Flußmittelkomponenten ist und $[Ni]_F$ die Ni Menge (%) der Flußmittelkomponenten ist.

3. Draht zum Unterpulverlichtbogenschweißen gemäß Anspruch 1,
wobei der Draht umfaßt, relativ zu einer Gesamtmasse des Drahtes und in Masse-%:

C: 0,07 bis 0,13%,
Si: 0,05 bis 0,50%,
Mn: 0,20 bis 1,00%,
Cr: 8,00 bis 10,50%,
Mo: 0,85 bis 1,20%,
V: 0,15 bis 0,30%,
Nb: 0,02 bis 0,08%,
Co: 0,05 bis 0,80% und
N: 0,03 bis 0,07%,

wobei:

Ni: 0,50% oder weniger,
P: 0,010% oder weniger,
S: 0,002 bis 0,010%,
Cu: 0,30% oder weniger,
Al: 0,04% oder weniger,
B: 0,0015% oder weniger,
O: 0,030% oder weniger,
eine Gesamtmenge der enthaltenen Mn Menge und der enthaltenen Ni Menge: 0,50 bis 1,15%,

ein Verhältnis Mn/S der enthaltenen Mn Menge zu der enthaltenen S Menge: 87 oder mehr, und
der Rest Fe und unvermeidbare Verunreinigungen sind,

wobei:
das Flußmittel umfaßt, relativ zu einer Gesamtmasse des Flußmittels und in Masse-%:

ein Metallfluorid bezogen auf F: 1,5 bis 11%,
ein Metallcarbonat bezogen auf $CO_2$: 3 bis 15%,
ein oder zwei oder mehrere von MgO, $Al_2O_3$, $ZrO_2$ und $TiO_2$ im Gesamten: 10 bis 60%,
$SiO_2$: 5 bis 20%,
Mn: 2,5% oder weniger
Ni: 0,10% oder weniger
S: 0,010% oder weniger;
eines oder zwei oder mehrere von Ca, Si und Al im Gesamten: 0,5 bis 2,5%, und
die Folgenden erfüllt sind:

$$0,55\% \leq [Mn]_W + 0,1 \times [Mn]_F \leq 1,00\%,$$

$$[Ni]_W + [Ni]_F \leq 0,50\%,$$

$$0,60\% \leq [Mn]_W + 0,1 \times [Mn]_F + [Ni]_W + [Ni]_F \leq 1,15\%,$$

wobei $[Mn]_W$ die Mn Menge (%) der Drahtkomponenten ist, $[Ni]_W$ die Ni Menge (%) der Drahtkomponenten ist, $[Mn]_F$ die Mn Menge (%) der Flußmittelkomponenten ist und $[Ni]_F$ die Ni Menge (%) der Flußmittelkomponenten ist.

4. Draht zum Unterpulverlichtbogenschweißen gemäß Anspruch 3,
wobei der Draht und das Flußmittel mindestens eines von Pb und Bi umfassen, und
das Folgende erfüllt ist,

$$[Pb]_W + [Bi]_W + 0.2 \times [Pb]_F + 0.2 \times [Bi]_F \leq 2.0 \text{ ppm},$$

wobei $[Pb]_W$ die Pb Menge in ppm der Drahtkomponenten ist, $[Bi]_W$ die Bi Menge in ppm der Drahtkomponenten ist, $[Pb]_F$ die Pb Menge in ppm der Flußmittelkomponenten ist, und $[Bi]_F$ die Bi Menge in ppm der Flußmittelkomponenten ist.

5. Draht zum Unterpulverlichtbogenschweißen gemäß Anspruch 3, wobei der Draht und das Flußmittel mindestens eines von P, Sn, As, und Sb umfassen, und
die Folgenden erfüllt sind:

$$X = 10 \times [P]_W + 4 \times [Sn]_W + [As]_W + 5 \times [Sb]_W,$$

$$Y = 10 \times [P]_F + 4 \times [Sn]_F + [As]_F + 5 \times [Sb]_F,$$

$$X + 0.2 \times Y \leq 1500 \text{ ppm},$$

wobei $[P]_W$ die P Menge in ppm der Drahtkomponenten ist, $[Sn]_W$ die Sn Menge in ppm der Drahtkomponenten ist, $[As]_W$ die As Menge in ppm der Drahtkomponenten ist, $[Sb]_W$ die Sb Menge in ppm der Drahtkomponenten ist, $[P]_F$ die P Menge in ppm der Flußmittelkomponenten ist, $[Sn]_F$ die Sn Menge in ppm der Flußmittelkomponenten ist, $[As]_F$ die As Menge in ppm der Flußmittelkomponenten ist, $[Sb]_F$ die Sb Menge in ppm der Flußmittelkomponenten ist.

**6.** Draht zum Unterpulverlichtbogenschweißen gemäß Anspruch 1, wobei der Draht umfaßt, relativ zu einer Gesamtmasse des Drahtes und in Masse-%:

C: 0,03 bis 0,08%,
Si: 0,05 bis 0,50%,
Mn: 0,20 bis 1,40%,
Cr: 8,00 bis 10,50%,
Mo: 0,85 bis 1,20%,
V: 0,15 bis 0,30%,
Nb: 0,02 bis 0,09%,
N: 0,03 bis 0,09 %,

wobei:

Ni: 0,70% oder weniger,
P: 0,010% oder weniger,
S: 0,010% oder weniger,
Cu: 0,30% oder weniger,
Al: 0,04% oder weniger,
B: 0,0015% oder weniger,
O: 0,030% oder weniger,
eine Gesamtmenge der enthaltenen Mn Menge und der enthaltenen Ni Menge: 0,60 bis 1,75%,
ein Verhältnis Mn/S der enthaltenen Mn Menge zu der enthaltenen S Menge: 87 oder mehr,
eine Gesamtmenge der enthaltenen C Menge und der enthaltenen N Menge: 0,09 bis 0,15%, und gegebenenfalls
Co: 0,05 bis 0,80 %,
wobei der Rest Fe und unvermeidbare Verunreinigungen sind,
wobei das Folgende erfüllt wird,

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F + [Co]_W) \times 100 \geq 5\%,$$

wobei $[Co]_W$ die Co Menge (%) der Drahtkomponenten ist,

wobei:
das Flußmittel umfaßt, relativ zu einer Gesamtmasse des Flußmittels und in Masse-%:

ein Metallfluorid bezogen auf F: 1,5 bis 11%,
ein Metallcarbonat bezogen auf $CO_2$: 3 bis 15%,
ein oder zwei oder mehrere von MgO, $Al_2O_3$, $ZrO_2$ und $TiO_2$ im Gesamten: 10 bis 60%,
$SiO_2$: 5 bis 20%,
Mn: 2,5% oder weniger
Ni: 0,10% oder weniger
S: 0,010% oder weniger;
eines oder zwei oder mehrere von Ca, Si und Al im Gesamten: 0,5 bis 2,5%, und
die folgenden erfüllt werden:

$$0,55\% \leq [Mn]_W + 0,1 \times [Mn]_F \leq 1,00\%,$$

$$[Ni]_W + [Ni]_F \leq 0,70\%,$$

$$0,60\% \leq [Mn]_W + 0,1 \times [Mn]_F + [Ni]_W + [Ni]_F \leq 1,45\%,$$

$$([C]_W + 1.5 \times [N]_W) \times ([V]_W + 10 \times [Nb]_W - [Al]_W)/([Mn]_W + 0.1 \times [Mn]_F + [Ni]_W + [Ni]_F) \times 100 \geq 5\%,$$

wobei $[V]_W$ die V Menge (%) der Drahtkomponenten ist, $[Nb]_W$ die Nb Menge (%) der Drahtkomponenten ist, $[C]_W$ die C Menge (%) der Drahtkomponenten ist, $[N]_W$ die N Menge (%) der Drahtkomponenten ist, $[Ni]_W$ die Ni Menge (%) der Drahtkomponenten ist, $[Mn]_W$ die Mn Menge (%) der Drahtkomponenten ist, $[Al]_W$ die Al Menge (%) der Drahtkomponenten ist, $[Mn]_F$ die Mn Menge (%) der Flußmittelkomponenten ist und $[Ni]_F$ die Ni Menge (%) der Flußmittelkomponenten ist.

**7.** Draht zum Unterpulverlichtbogenschweißen gemäß Anspruch 6, wobei das Folgende erfüllt ist:

$$([C]_W + 1.5 \times [N]_W) \times ([V]_W + 10 \times [Nb]_W - [Al]_W)/([Mn]_W + [Ni]_W) \times 100 \geq 5\%,$$

wobei $[V]_W$ die V Menge (%) der Drahtkomponenten ist, $[Nb]_W$ die Nb Menge (%) der Drahtkomponenten ist, $[C]_W$ die C Menge (%) der Drahtkomponenten ist, $[N]_W$ die N Menge (%) der Drahtkomponenten ist, $[Ni]_W$ die Ni Menge (%) der Drahtkomponenten ist, $[Mn]_W$ die Mn Menge (%) der Drahtkomponenten ist, und $[Al]_W$ die Al Menge (%) der Drahtkomponenten ist.

## Revendications

**1.** Fil pour soudage à l'arc submergé à utiliser avec un flux,

(1) le fil comprenant, par rapport à la masse totale du fil et en % en masse :

C : 0,03 à 0,13% ;
Si : 0,05 à 0,50% ;
Mn : 0,20 à 1,40% ;
Cr : 8,00 à 10,50% ;
Mo : 0,85 à 1,20% ;
V: 0,15 à 0,30% ;
Nb : 0,02 à 0,09%, et
N : 0,03 à 0,09%,
dans lequel
Ni : 0,70% ou moins ;
P : 0,010% ou moins ;
S : 0,010% ou moins ;
Cu : 0,30% ou moins ;
Al : 0,04% ou moins ;
B : 0,0015% ou moins ;
O : 0,030% ou moins ;
la quantité totale de la quantité de Mn et de la quantité de Ni : 0,50 à 1,75%,
le rapport Mn/S de la quantité de Mn à la quantité de S : 87 ou plus, et
le reste est du Fe et les impuretés inévitables,

dans lequel :
le flux comprend, par rapport à la masse totale du flux et en % en masse :

un fluorure de métal, en termes de F : 1,5 à 11 % ;
un carbonate de métal, en termes de $CO_2$ : 3 à 15 % ;
un, deux ou plusieurs parmi MgO, $Al_2O_3$, $ZrO_2$ et $TiO_2$, au total : 10 à 60% ;
$SiO_2$: 5 à 20% ;
Mn : 2,5% ou moins ;
Ni : 0,10% ou moins ;

S : 0,010% ou moins ;
un, deux ou plusieurs de Ca, Si et Al, au total : 0,5 à 2,5%, et
les expressions suivantes sont satisfaites :

$$0,55\% \leq [Mn]_w + 0,1 \times [Mn]_F \leq 1,00\%,$$

$$[Ni]_w + [Ni]_F \leq 0,50\%,$$

$$0,60\% \leq [Mn]_w + 0,1 \times [Mn]_F + [Ni]_w + [Ni]_F \leq 1,15\%,$$

dans lesquelles $[Mn]_w$ est la quantité de Mn (%) des composants du fil, $[Ni]_w$ est la quantité de Ni (%) des composants du fil, $[Mn]_F$ est la quantité de Mn (%) des composants du flux, et $[Ni]_F$ est la quantité de Ni (%) des composants du flux ;

ou
(2) le fil comprenant, par rapport à la masse totale du fil et en % en masse :

C : 0,07 à 0,13% ;
Si : 0,05 à 0,50% ;
Mn : 0,20 à 1,00% ;
Cr : 8,00 à 10,50% ;
Mo : 0,85 à 1,20% ;
V: 0,15 à 0,30% ;
Nb : 0,02 à 0,08%,
Co : 0,05 à 0,80%, et
N : 0,03 à 0,07%,
dans lequel
Ni : 0,50% ou moins ;
P : 0,010% ou moins ;
S: 0,002 à 0,010% ;
Cu : 0,30% ou moins ;
Al : 0,04% ou moins ;
B : 0,0015% ou moins ;
O : 0,030% ou moins ;
la quantité totale de la quantité de Mn et de la quantité de Ni : 0,50 à 1,15%,
le rapport Mn/S de la quantité de Mn à la quantité de S : 87 ou plus, et
le reste est du Fe et les impuretés inévitables,

dans lequel :
le flux comprend, par rapport à la masse totale du flux et en % en masse :

un fluorure de métal, en termes de F : 1,5 à 11 % ;
un carbonate de métal, en termes de $CO_2$ : 3 à 15 % ;
un, deux ou plusieurs parmi MgO, $Al_2O_3$, $ZrO_2$ et $TiO_2$, au total : 10 à 60% ; $SiO_2$: 5 à 20% ;
Mn : 2,5% ou moins ;
Ni : 0,10% ou moins ;
S : 0,010% ou moins ;
un, deux ou plusieurs de Ca, Si et Al, au total : 0,5 à 2,5%, et
les expressions suivantes sont satisfaites :

$$0,55\% \leq [Mn]_w + 0,1 \times [Mn]_F \leq 1,00\%,$$

$$[Ni]_w + [Ni]_F \leq 0,50\%,$$

$$0,60\% \leq [Mn]_w + 0,1 \times [Mn]_F + [Ni]_w + [Ni]_F \leq 1,15\%,$$

dans lesquelles $[Mn]_w$ est la quantité de Mn (%) des composants du fil, $[Ni]_w$ est la quantité de Ni (%) des composants du fil, $[Mn]_F$ est la quantité de Mn (%) des composants du flux, et $[Ni]_F$ est la quantité de Ni (%) des composants du flux ;

ou
(3) le fil comprenant, par rapport à la masse totale du fil et en % en masse :

C : 0,03 à 0,08% ;
Si : 0,05 à 0,50% ;
Mn : 0,20 à 1,40% ;
Cr : 8,00 à 10,50% ;
Mo : 0,85 à 1,20% ;
V : 0,15 à 0,30% ;
Nb : 0,02 à 0,09% ;
N : 0,03 à 0,09%,
dans lequel
Ni : 0,70% ou moins ;
P : 0,010% ou moins ;
S : 0,010% ou moins ;
Cu : 0,30% ou moins ;
Al : 0,04% ou moins ;
B : 0,0015% ou moins ;
O : 0,030% ou moins ;
la quantité totale de la quantité de Mn et de la quantité de Ni : 0,60 à 1,75%,
le rapport Mn/S de la quantité de Mn à la quantité de S : 87 ou plus,
la quantité totale de la quantité de C et la quantité de N : 0,09 à 0,15%, et le cas échéant :

Co : 0,05 à 0,80%, et
le reste est du Fe et les impuretés inévitables,

dans lequel les expressions suivantes sont satisfaites :

$$([C]_w + 1,5 \times [N]_w) \times ([V]_w + 10 \times [Nb]_w - [Al]_w)/([Mn]_w + 0,1 \times [Mn]_F + [Ni]_w + [Ni]_F + [Co]_w) \times 100 \geq 5\%,$$

dans lesquelles $[Co]_w$ est la quantité de Co (%) des composants du fil, dans lequel :

le flux comprend, par rapport à la masse totale du flux et en % en masse :
un fluorure de métal, en termes de F : 1,5 à 11 % ;
un carbonate de métal, en termes de $CO_2$ : 3 à 15 % ;
un, deux ou plusieurs parmi MgO, $Al_2O_3$, $ZrO_2$ et $TiO_2$, au total : 10 à 60% ;
$SiO_2$ : 5 à 20% ;
Mn : 2,5% ou moins ;
Ni : 0,10% ou moins ;
S : 0,010% ou moins ;
un, deux ou plusieurs de Ca, Si et Al, au total : 0,5 à 2,5%, et
les expressions suivantes sont satisfaites :

$$0,55\% \leq [Mn]_w + 0,1 \times [Mn]_F \leq 1,00\%,$$

$$[Ni]_w + [Ni]_F \leq 0,70\%,$$

$$0,60\% \leq [Mn]_w + 0,1 \times [Mn]_F + [Ni]_w + [Ni]_F \leq 1,45\%,$$

$$([C]_w + 1,5 \times [N]_w) \times ([V]_w + 10 \times [Nb]_w - [Al]_w)/([Mn]_w + 0,1 \times [Mn]_F + [Ni]_w + [Ni]_F) \times$$
$$100 \geq 5\%,$$

dans lesquelles $[V]_w$ est la quantité de V (%) des composants du fil, $[Nb]_w$ est la quantité de Nb (%) des composants du fil, $[C]_w$ est la quantité de C (%) des composants du fil, $[N]_w$ est la quantité de N (%) des composants du fil, $[Ni]_w$ est la quantité de Ni (%) des composants du fil, $[Mn]_w$ est la quantité de Mn (%) des composants du fil, $[Al]_w$ est la quantité de Al (%) des composants du fil, $[Mn]_F$ est la quantité de Mn (%) des composants du flux, et $[Ni]_F$ est la quantité de Ni (%) des composants du flux

2. Fil pour soudage à l'arc submergé selon la revendication 1, le fil comprenant, par rapport à la masse totale du fil et en % en masse :

C : 0,03 à 0,13% ;
Si : 0,05 à 0,50% ;
Mn : 0,20 à 1,40% ;
Cr : 8,00 à 10,50% ;
Mo : 0,85 à 1,20% ;
V: 0,15 à 0,30% ;
Nb : 0,02 à 0,09%, et
N : 0,03 à 0,09%,
dans lequel
Ni : 0,70% ou moins ;
P : 0,010% ou moins ;
S : 0,010% ou moins ;
Cu : 0,30% ou moins ;
Al : 0,04% ou moins ;
B : 0,0015% ou moins ;
O : 0,030% ou moins ;
la quantité totale de la quantité de Mn et de la quantité de Ni : 0,50 à 1,75%,
le rapport Mn/S de la quantité de Mn à la quantité de S : 87 ou plus, et
le reste est du Fe et les impuretés inévitables,

dans lequel :
le flux comprend, par rapport à la masse totale du flux et en % en masse :

un fluorure de métal, en termes de F : 1,5 à 11 % ;
un carbonate de métal, en termes de $CO_2$ : 3 à 15 % ;
un, deux ou plusieurs parmi MgO, $Al_2O_3$, $ZrO_2$ et $TiO_2$, au total : 10 à 60% ; $SiO_2$: 5 à 20% ;
Mn : 2,5% ou moins ;
Ni : 0,10% ou moins ;
S : 0,010% ou moins ;
un, deux ou plusieurs de Ca, Si et Al, au total : 0,5 à 2,5%, et
les expressions suivantes sont satisfaites :

$$0,55\% \leq [Mn]_w + 0,1 \times [Mn]_F \leq 1,00\%,$$

$$[Ni]_w + [Ni]_F \leq 0,50\%,$$

$$0,60\% \leq [Mn]_w + 0,1 \times [Mn]_F + [Ni]_w + [Ni]_F \leq 1,15\%,$$

dans lesquelles $[Mn]_W$ est la quantité de Mn (%) des composants du fil, $[Ni]_w$ est la quantité de Ni (%) des composants du fil, $[Mn]_F$ est la quantité de Mn (%) des composants du flux, et $[Ni]_F$ est la quantité de Ni (%) des composants du flux.

3.  Fil pour soudage à l'arc submergé selon la revendication 1, le fil comprenant, par rapport à la masse totale du fil et en % en masse :

C : 0,07 à 0,13% ;
Si : 0,05 à 0,50% ;
Mn : 0,20 à 1,00% ;
Cr : 8,00 à 10,50% ;
Mo : 0,85 à 1,20% ;
V: 0,15 à 0,30% ;
Nb : 0,02 à 0,08%,
Co : 0,05 à 0,80%, et
N : 0,03 à 0,07%,
dans lequel
Ni : 0,50% ou moins ;
P : 0,010% ou moins ;
S : 0,002% à 0,010%;
Cu : 0,30% ou moins ;
Al : 0,04% ou moins ;
B : 0,0015% ou moins ;
O : 0,030% ou moins ;
la quantité totale de la quantité de Mn et de la quantité de Ni : 0,50 à 1,15%,
le rapport Mn/S de la quantité de Mn à la quantité de S : 87 ou plus, et
le reste est du Fe et les impuretés inévitables,

dans lequel :
le flux comprend, par rapport à la masse totale du flux et en % en masse :

un fluorure de métal, en termes de F : 1,5 à 11 % ;
un carbonate de métal, en termes de $CO_2$ : 3 à 15 % ;
un, deux ou plusieurs parmi MgO, $Al_2O_3$, $ZrO_2$ et $TiO_2$, au total : 10 à 60% ; $SiO_2$: 5 à 20% ;
Mn : 2,5% ou moins ;
Ni : 0,10% ou moins ;
S : 0,010% ou moins ;
un, deux ou plusieurs de Ca, Si et Al, au total : 0,5 à 2,5%, et
les expressions suivantes sont satisfaites :

$$0,55\% \leq [Mn]_w + 0,1 \times [Mn]_F \leq 1,00\%,$$

$$[Ni]_w + [Ni]_F \leq 0,50\%,$$

$$0,60\% \leq [Mn]_w + 0,1 \times [Mn]_F + [Ni]_w + [Ni]_F \leq 1,15\%,$$

dans lesquelles $[Mn]_w$ est la quantité de Mn (%) des composants du fil, $[Ni]_w$ est la quantité de Ni (%) des composants du fil, $[Mn]_F$ est la quantité de Mn (%) des composants du flux, et $[Ni]_F$ est la quantité de Ni (%) des composants du flux

4.  Fil pour soudage à l'arc submergé selon la revendication 3, le fil et le flux comprennent au moins l'un de Pb et Bi, et les expressions suivantes sont satisfaites :

$$[Pb]_w + [Bi]_w + 0{,}2 \times [Pb]_F + 0{,}2 \times [Bi]_F \leq 2{,}0 \text{ ppm,}$$

dans laquelle $[Pb]_w$ est la quantité de Pb en ppm des composants du fil, $[Bi]_w$ est la quantité de Bi en ppm des composants du fil, $[Pb]_F$ est la quantité de Pb en ppm des composants du flux, et $[Bi]_F$ est la quantité de Bi en ppm des composants du flux.

5. Fil pour soudage à l'arc submergé selon la revendication 3, dans lequel le fil et le flux comprennent au moins l'un de P, Sn, As et Sb, et les expressions suivantes sont satisfaites :

$$X = 10 \times [P]_w + 4 \times [Sn]_w + [As]_w + 5 \times [Sb]_w,$$

$$Y = 10 \times [P]_F + 4 \times [Sn]_F + [As]_F + 5 \times [Sb]_F,$$

$$X + 0{,}2 \times Y \leq 1500 \text{ ppm,}$$

dans laquelle $[P]_w$ est la quantité de P en ppm des composants du fil, $[Sn]_w$ est la quantité de Sn en ppm des composants du fil, $[As]_w$ est la quantité de As en ppm des composants du fil, $[Sb]_w$ est la quantité de Sb en ppm des composants du fil, $[P]_F$ est la quantité de P en ppm des composants du flux, $[Sn]_F$ est la quantité de Sn en ppm des composants du flux, $[As]_F$ est la quantité de As en ppm des composants du flux, et $[Sb]_F$ est la quantité de Sb en ppm des composants du flux.

6. Fil pour soudage à l'arc submergé selon la revendication 1, le fil comprenant, par rapport à la masse totale du fil et en % en masse :

C : 0,03 à 0,08% ;
Si : 0,05 à 0,50% ;
Mn : 0,20 à 1,40% ;
Cr : 8,00 à 10,50% ;
Mo : 0,85 à 1,20% ;
V: 0,15 à 0,30% ;
Nb : 0,02 à 0,09%, et
N : 0,03 à 0,09%,
dans lequel
Ni : 0,70% ou moins ;
P : 0,010% ou moins ;
S : 0,010% ou moins ;
Cu : 0,30% ou moins ;
Al : 0,04% ou moins ;
B : 0,0015% ou moins ;
O : 0,030% ou moins ;
la quantité totale de la quantité de Mn et de la quantité de Ni : 0,60 à 1,75%,
le rapport Mn/S de la quantité de Mn à la quantité de S : 87 ou plus,
la quantité totale de la quantité de C et de la quantité de N : 0,09 à 0,15%, et le cas échéant,
Co : 0,05 à 0,80%, et
le reste est du Fe et les impuretés inévitables,
dans lequel les expressions suivantes sont satisfaites :

$$([C]_w + 1{,}5 \times [N]_w) \times ([V]_w + 10 \times [Nb]_w - [Al]_w)/([Mn]_w + 0{,}1 \times [Mn]_F + [Ni]_w + [Ni]_F + [Co]_w) \times 100 \geq 5\%,$$

dans lequel $[Co]_w$ est la quantité de Co (%) des composants du fil,

dans lequel :

le flux comprend, par rapport à la masse totale du flux et en % en masse :
un fluorure de métal, en termes de F : 1,5 à 11 % ;
un carbonate de métal, en termes de $CO_2$ : 3 à 15 % ;
un, deux ou plusieurs parmi MgO, $Al_2O_3$, $ZrO_2$ et $TiO_2$, au total : 10 à 60% ;
$SiO_2$: 5 à 20% ;
Mn : 2,5% ou moins ;
Ni : 0,10% ou moins ;
S : 0,010% ou moins ;
un, deux ou plusieurs de Ca, Si et Al, au total : 0,5 à 2,5%, et
les expressions suivantes sont satisfaites :

$$0,55\% \leq [Mn]_w + 0,1 \times [Mn]_F \leq 1,00\%,$$

$$[Ni]_w + [Ni]_F \leq 0,70\%,$$

$$0,60\% \leq [Mn]_w + 0,1 \times [Mn]_F + [Ni]_w + [Ni]_F \leq 1,45\%,$$

$$([C]_w + 1,5 \times [N]_w) \times ([V]_w + 10 \times [Nb]_w - [Al]_w)/([Mn]_w + 0,1 \times [Mn]_F + [Ni]_w + [Ni]_F) \times 100 \geq 5\%,$$

dans lesquelles $[V]_w$ est la quantité de V (%) des composants du fil, $[Nb]_w$ est la quantité de Nb (%) des composants du fil, $[C]_w$ est la quantité de C (%) des composants du fil, $[N]_w$ est la quantité de N (%) des composants du fil, $[Ni]_w$ est la quantité de Ni (%) des composants du fil, $[Mn]_w$ est la quantité de Mn (%) des composants du fil, $[Al]_w$ est la quantité de Al (%) des composants du fil, $[Mn]_F$ est la quantité de Mn (%) des composants du flux, et $[Ni]_F$ est la quantité de Ni (%) des composants du flux.

7. Fil pour soudage à l'arc submergé selon la revendication 6, dans lequel l'expression suivante est satisfaite :

$$([C]_w + 1,5 \times [N]_w) \times ([V]_w + 10 \times [Nb]_w - [Al]_w)/([Mn]_w + [Ni]_w) \times 100 \geq 5\%,$$

dans laquelle $[V]_w$ est la quantité de V (%) des composants du fil, $[Nb]_w$ est la quantité de Nb (%) des composants du fil, $[C]_w$ est la quantité de C (%) des composants du fil, $[N]_w$ est la quantité de N (%) des composants du fil, $[Ni]_w$ est la quantité de Ni (%) des composants du fil, $[Mn]_w$ est la quantité de Mn (%) des composants du fil, et $[Al]_w$ est la quantité de Al (%) des composants du fil.

FIG. 1

30°

25

13

Unit : mm

FIG. 2

2° 2°

35

R10

70

Unit : mm

FIG. 3

30°

20

12. 5

12. 5

10

Unit : mm

FIG. 4A

$\phi 6. 0 \pm 0. 02$

$\phi 6. 2 \pm 0. 02$

A

M12, P1. 75

R5

30

10

80

Unit : mm

FIG. 4B

Unit : mm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005257853 A1
- JP S63220993 A
- JP H09277084 A